# EUROPEAN PATENT SPECIFICATION

(11) **EP 4 435 171 B1**
(45) Date of publication and mention of the grant of the patent: **31.12.2025**
(21) Application number: 22898988.5
(22) Date of filing: 22.11.2022
(51) Int. Cl.: D06F 58/45, D06F 58/24, D06F 58/34, D06F 34/14, D06F 105/30, D06F 105/08, D06F 105/36, D06F 103/54, D06F 103/58

(54) **GARMENT PROCESSING DEVICE CONTROL METHOD**
VERFAHREN ZUR STEUERUNG EINER KLEIDUNGSVERARBEITUNGSVORRICHTUNG
PROCÉDÉ DE COMMANDE D'UN DISPOSITIF DE TRAITEMENT DE VÊTEMENTS

(30) Priority: 24.11.2021 KR 20210163006
(43) Date of publication of application: 25.09.2024
(73) Proprietor: LG Electronics Inc., Yeongdeungpo-gu Seoul 07336 (KR)
(72) Inventor: JEONG, Jiyu, Seoul 08592 (KR); LEE, Hyeokjong, Seoul 08592 (KR); CHEON, Taewon, Seoul 08592 (KR)
(74) Representative: Vossius & Partner Patentanwälte Rechtsanwälte mbB
(86) International application number: PCT/KR2022/018496
(87) International publication number: WO 2023/096306

(56) References cited:
- EP-B1- 3 024 969
- CN-A- 105 755 780
- CN-A- 113 265 862
- CN-A- 113 605 050
- KR-A- 20190 130 898
- KR-A- 20210 077 523
- KR-A- 20210 099 913
- US-A1- 2016 138 209

## Description

### [Technical Field]

The present invention relates to a laundry treating apparatus, and more specifically, to a method for controlling a laundry treating apparatus for draining condensate generated in a heat exchanger.

### [Background]

A laundry treating apparatus is an apparatus that may remove dust or foreign substances attached to laundry by applying a physical force to the laundry, and includes a washing machine, a dryer, a refresher (a styler), and the like.

In this regard, the washing machine is constructed to perform a washing cycle to separate and remove the foreign substances from the laundry by supplying water and detergent to the laundry. Additionally, the dryer is commonly constructed to perform a drying cycle to remove moisture contained in the laundry by producing high-temperature hot air via a heater and exposing hot air to the laundry.

In addition, the dryers may be divided into a circulation-type dryer and an exhaust-type dryer depending on a scheme of supplying hot air. First, the circulation-type dryer is a type of dryer in which hot air supplied into a drum circulates inside the dryer and repeats heating and cooling. Additionally, the exhaust-type dryer is a type of dryer in which hot air supplied into the drying drum exits the drying drum and is discharged to the outside of the dryer.

A recent dryer removes moisture absorbed in an object-to-be-dried by supplying hot air into the drum while the object-to-be-dried is disposed inside the rotating drum. Hot air supplied into the drum is generated by electrical resistance heat, combustion heat using gas fuel, or a condenser that constitutes a heat pump cycle, and hot air generated as such is supplied into the drum by a blowing fan.

In one example, the dryer removes moisture by supplying hot air into the drum while the object-to-be-dried is put into the rotating drum. Hot air supplied to the drum is generated by applying the electrical resistance heat or the heat obtained by burning fuel such as gas to air supplied to the drum, but in some cases, the heat pump is used to generate hot air to reduce energy consumption.

Specifically, high-temperature air exhausted from the drum is cooled and condensed by exchanging heat with an evaporator, and air supplied to the drum is heat exchanged with the condenser to generate hot air. When such a heat pump is used, heat discarded during the exhaust or condensation process may be re-input in generating hot air, thereby reducing the energy consumption that much.

However, as described above, air passing through the evaporator is exhausted after coming into contact with the laundry, which is the object-to-be-dried, and therefore contains a lot of lint separated from the laundry during the drying process. To remove such lint, a lint removal filter is installed in a hot air exhaust flow channel at a location before air enters the evaporator, and this partially blocks the lint from being exhausted to the outside or flowing into the evaporator.

In this case, to increase a lint removal performance, it is necessary to make a mesh of the lint removal filter small, but as the size of the mesh decreases, a resistance of the flow channel increases and an exhaust efficiency decreases, so that there is a limit in reducing the mesh size. As a result, some of the lint passes through the lint removal filter and flows into the evaporator, and the lint introduced as such is attached to a surface of the evaporator, reducing a heat exchange efficiency and increasing a flow resistance by blocking a space in the evaporator.

To solve such problem, various attempts have been made to remove the lint accumulated on the surface of the evaporator. As an example, a laundry treating apparatus that removes the lint by spraying condensate produced via condensation by the evaporator onto the surface of the evaporator has been disclosed, and such technology is disclosed in Korean Patent Application Publication No. 10-2017-0082045.

However, because the condensate is not always supplied sufficiently, there is a problem that the lint removal is impossible when the amount of available condensate is small, and even when the amount of condensate is sufficient, a separate pump and a separate valve to control a condensate flow channel are required for the condensate sprayed via a nozzle to be evenly distributed on the surface of the evaporator.

KR20190169253A discloses a laundry treating apparatus including first and second heat exchangers and a water collector to collect condensate generated from the first heat exchanger and sensing means for sensing a water level of the water collector.

In one example, in a case of a typical dryer, when drying the laundry, the lint contained in the laundry scatters along with the drying of the laundry and is filtered via the separate lint filter. However, in a case of some lint, it is not collected in the lint filter, but is attached to the surface of the evaporator and flows with the condensate by the condensate generated in the evaporator.

In the case of lint that flows together with the condensate as such, it may be stuck to the pump or the valve while continuously circulating with the condensate. In this regard, in the case of the pump, as the condensate flows at a relatively high pressure, the lint may stick and remain less. However, in the case of valve, the lint may be stuck between a valve body and a valve disc because of a valve structure, and the lint stuck between the valve body and the valve disc may interfere with rotation of the valve disc and cause malfunction of the valve.

### [Summary]

### [Technical Problem]

The present invention was designed to solve the problems described above, and is to provide a method for controlling a laundry treating apparatus, which washes a heat exchanger using condensate, that may improve drainage of the condensate and reduce malfunction by improving a drainage process of the condensate.

In addition, the present invention was designed to solve the problems described above, and is to provide a method for controlling a laundry treating apparatus, which washes a heat exchanger using condensate, that may prevent malfunction of a valve that controls a flow channel of the condensate.

In addition, the present invention was designed to solve the problems described above, and is to provide a method for controlling a laundry treating apparatus, which washes a heat exchanger using condensate, that may improve operation of a valve that controls a flow channel of the condensate to prevent lint from accumulating in the valve.

In addition, the present invention was designed to solve the problems described above, and is to provide a method for controlling a laundry treating apparatus, which washes a heat exchanger using condensate, that may improve operation of a valve that controls a flow channel of the condensate to prevent valve leakage caused by accumulation of lint.

Purposes of the present invention are not limited to the purposes mentioned above, and other purposes not mentioned will be clearly understood by those skilled in the art from the description below.

### [Technical Solutions]

A method for controlling a laundry treating apparatus including a drum that receives an input object-to-be-dried therein, a blower that circulates air in the drum, a heat pump that includes a first heat exchanger and a second heat exchanger and dehumidifies/heats air, a water collector that collects condensate generated from the first heat exchanger, a condensate pump that drains the condensate of the water collector, and a flow channel switching valve that switches a drain flow channel of the condensate or a flow channel for washing the first heat exchanger according to an embodiment of the present disclosure to achieve the above purposes includes a first water level sensing step of sensing a water level of the water collector, a first drainage step of deceleration operation of the blower for a certain period of time simultaneously with operation of the condensate pump as the water level of the condensate of the water collector is sensed as a full water level in the first water level sensing step, a second water level sensing step of sensing the number of times the water level of the water collector reaches the full water level during a set period of time after the first drainage step, a flow channel switching valve initialization step of initializing a flow channel location of the flow channel switching valve when the number of times the water level of the water collector reaches the full water level within the set period of time is sensed to be equal to or greater than a set number of times in the second water level sensing step, and a second drainage step of draining the condensate by deceleration or stopping the operation of the blower for a certain period of time simultaneously with the operation of the condensate pump after the flow channel switching valve initialization step.

In one implementation, the first water level sensing step may include determining the water level of the water collector as the full water level when the water level of the water collector is repeatedly sensed a first water level sensing number of times or more during a first water level sensing time period.

In one implementation, the first drainage step may further include a pump operating step of operating the condensate pump, and a blower deceleration step of temporarily deceleration the operation of the blower when the flow channel switching valve is switched to a drainage location during the operation of the condensate pump.

In one implementation, the second water level sensing step may further include a water level sensing step of sensing the water level of the water collector after the first drainage step, and the first water level sensing step may be performed after a certain period of time when the water level of the water collector does not exceed a set water level in the water level sensing step.

In one implementation, the method may further include a varied water level sensing step of sensing a change in the water level of the water collector when the water level of the water collector exceeds the set water level in the water level sensing step.

In one implementation, the varied water level sensing step may further include a water level change sensing step of sensing that the water level of the water collector changes during a second water level sensing time period.

In one implementation, the varied water level sensing step may include performing the water level sensing step again when the water level of the water collector does not change within the second water level sensing time period.

In one implementation, the varied water level sensing step may further include a number of times the full water level is reached sensing step of sensing the number of times the water level of the water collector is sensed as the full water level during the second water level sensing time period when the water level of the water collector changes within the second water level sensing time period.

In one implementation, the number of times the full water level is reached sensing step may include maintaining the operation of the condensate pump when the water level of the water collector is sensed as the full water level a second water level sensing number of times or less during the second water level sensing time period.

In one implementation, the number of times the full water level is reached sensing step may include performing the flow channel switching valve initialization step when the water level of the water collector is sensed as the full water level a second water level sensing number of times or more during the second water level sensing time period.

In one implementation, the number of times the full water level is reached sensing step may make the determination based on the water level of the water collector being sensed at least twice during the second water level sensing time period.

In one implementation, the flow channel switching valve may include the drain flow channel for draining the condensate, a plurality of washing flow channels for the condensate to wash the first heat exchanger, a switcher scroll that switches a rotation angle corresponding to the drain flow channel and the washing flow channels, and a stopper that is disposed between the drain flow channel and the washing flow channels and limits rotation of the switcher scroll, and the flow channel switching valve initialization step may include rotating the switcher scroll in one direction or the other direction, but controlling the rotation angle thereof such that the switcher scroll passes a location of the drain flow channel or locations of the washing flow channels adjacent to the stopper.

In one implementation, the second drainage step may further include a blower stopping step of stopping the operation of the blower when the flow channel switching valve is switched to a drainage location during the operation of the condensate pump.

In one implementation, the second drainage step may further include a blower deceleration step of deceleration the operation of the blower when the flow channel switching valve is switched to a drainage location during the operation of the condensate pump.

In one implementation, the second drainage step may include at least one of a blower stopping step of stopping the operation of the blower when the flow channel switching valve is switched to a drainage location during the operation of the condensate pump and a blower deceleration step of deceleration the operation of the blower.

In one implementation, the method may further include, after the second drainage step, a third water level sensing step of sensing the water level of the condensate drained in the second drainage step, and the third water level sensing step may include performing the first water level sensing step again when the water level of the water collector is sensed to be equal to or lower than a set water level, and stopping operation of the laundry treating apparatus when the water level of the water collector is sensed to be equal to or higher than the set water level.

In one implementation, the method may further include a notification step of notifying a user when the water level of the water collector is sensed to be equal to or higher than the set water level in the third water level sensing step.

The features of each of the above-described embodiments may be implemented in combination in other embodiments as long as they are not contradictory or exclusive to other embodiments.

### [Advantageous Effects]

According to the method for controlling the laundry treating apparatus according to an embodiment of the present invention, which washes the heat exchanger using the condensate, the drainage of the condensate may be improved and the malfunction may be reduced by improving the drainage process of the condensate.

In addition, according to the method for controlling the laundry treating apparatus according to an embodiment of the present invention, which washes the heat exchanger using the condensate, the malfunction of the valve that controls the flow channel of the condensate may be prevented.

In addition, according to the method for controlling the laundry treating apparatus according to an embodiment of the present invention, which washes the heat exchanger using the condensate, the operation of the valve that controls the flow channel of the condensate may be improved to prevent the lint from accumulating in the valve.

In addition, according to the method for controlling the laundry treating apparatus according to an embodiment of the present invention, which washes the heat exchanger using the condensate, the operation of the valve that controls the flow channel of the condensate may be improved to prevent the valve leakage caused by the accumulation of the lint.

Effects of the present invention are not limited to the effects mentioned above, and other effects not mentioned will be clearly understood by those skilled in the art from the description below.

### [Brief Description of the Drawings]

FIG. 1 is a perspective view showing a laundry treating apparatus according to an embodiment of the present disclosure.
FIG. 2 is a cross-sectional view showing the interior of a laundry treating apparatus according to an embodiment of the present disclosure.
FIG. 3 is an exploded perspective view showing a laundry treating apparatus according to an embodiment of the present disclosure.
FIG. 4 is a perspective view showing a base and a rear plate according to an embodiment of the present disclosure.
FIG. 5 is a perspective view showing a duct cover, a nozzle cover, and a flow channel switching valve according to an embodiment of the present disclosure.
FIG. 6 is a perspective view showing a duct cover according to an embodiment of the present disclosure.
FIG. 7 is an exploded rear perspective view showing a flow channel switching valve according to an embodiment of the present disclosure.
FIG. 8 is an exploded perspective view showing coupling of a switcher connector and a transmitter in a laundry treating apparatus according to an embodiment of the present disclosure.
FIGS. 9 to 11 are flowcharts showing a condensate draining process according to embodiments of the present disclosure.

### [Best Mode]

In the present document, the same or similar reference numerals are assigned to the same or similar components even in different embodiments, and a description thereof is replaced with the first description. As used herein, a singular expression includes a plural expression unless the context clearly dictates otherwise. Additionally, in describing the embodiment disclosed herein, when it is determined that detailed descriptions of related known technologies may obscure the gist of the embodiment disclosed herein, the detailed descriptions will be omitted. In addition, it should be noted that the attached drawings are only intended to facilitate understanding of the embodiment disclosed herein, and it should not be construed as limiting the technical idea disclosed herein by the attached drawings.

In addition, the terms described below are terms defined in consideration of functions in the present disclosure, and may vary depending on the intention of the user or the operator or custom. Therefore, the definition thereof should be made based on the contents throughout the present document. The terminology used in the detailed description is merely to describe the embodiments of the present disclosure and should in no way be limiting. In the present description, expressions such as "include" or "have" are intended to indicate certain features, numbers, steps, operations, elements, and subsets or combinations thereof, and should not be construed to exclude existence or possibility of one or more other features, numbers, steps, operations, elements, and subsets or combinations thereof, other than those described.

Additionally, in describing the components of the embodiment of the present disclosure, terms such as first, second, A, B, (a), (b), and the like may be used. Such term is only used to distinguish one component from other components, and nature, sequence, order, or the like of the corresponding component is not limited by the term.

Hereinafter, a laundry treating apparatus according to an embodiment of the present disclosure will be described in detail with reference to the attached drawings.

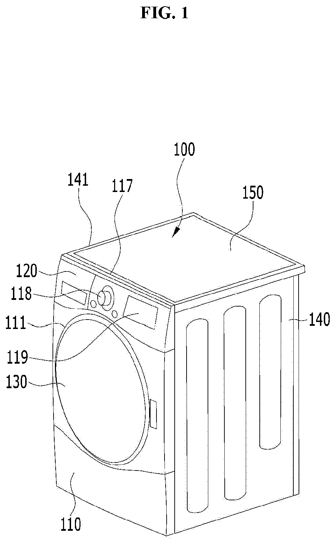

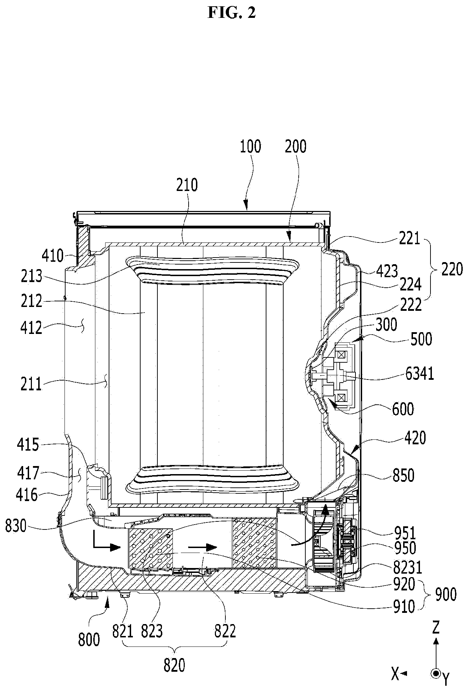

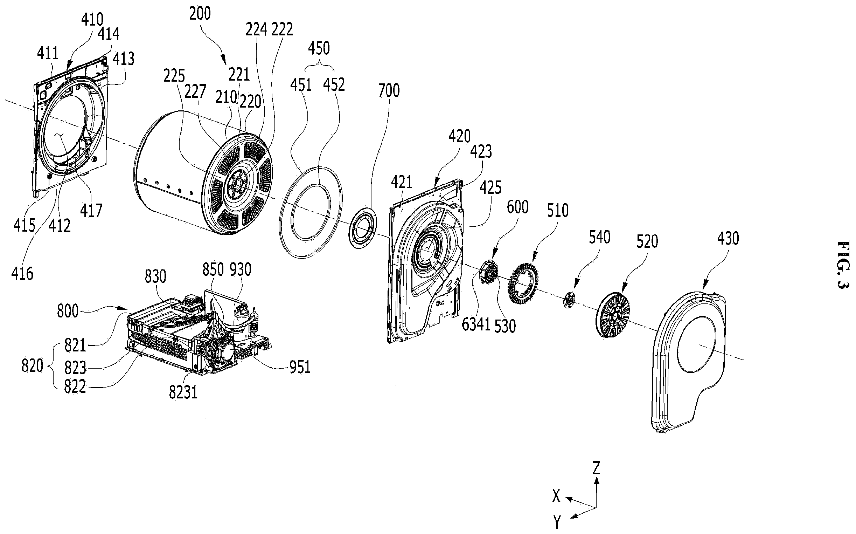

FIG. 1 is a perspective view showing a laundry treating apparatus according to an embodiment of the present disclosure, FIG. 2 is a cross-sectional view showing the interior of a laundry treating apparatus according to an embodiment of the present disclosure, and FIG. 3 is an exploded perspective view showing a laundry treating apparatus according to an embodiment of the present disclosure.

As shown in FIGS. 1 to 3, a laundry treating apparatus according to an embodiment of the present disclosure includes a cabinet 100 that forms an outer appearance of the apparatus, a drum 200 accommodated inside the cabinet 100 to accommodate laundry therein, a driver that rotates the drum 200, a heat exchanger assembly 900 that supplies hot air to the drum 200, and a base 800 that has a circulation flow channel 820.

The cabinet 100 may include a front panel 110 that forms a front surface of the laundry treating apparatus, an upper panel 150 that forms a top surface, and a side panel 140 that forms a side surface. The side panel 140 may include a left panel (not shown) that forms a left side surface. The front panel 110 may include an opening 111 defined to be in communication with the interior of the cabinet 100 and a door 130 pivotably coupled to the cabinet 100 to open and close the opening 111.

A manipulation panel 117 may be installed on the front panel 110. The manipulation panel 117 may include an input unit 118 that receives a control command from a user and a display 119 that outputs information such as the control command or the like selectable by the user. The control command may include a drying course or a drying option that may perform a series of drying cycles.

The input unit 118 may include a power supply request unit that requests power supply to the laundry treating apparatus, a course input unit that allows the user to select a desired course among multiple courses, and an execution request unit that requests start of the course selected by the user.

The display 119 may include at least one of a display panel that may output text and figures, and a speaker that may output a voice signal and sound.

In one example, the front panel 110 may have a water storage tank 120 that separately stores moisture generated in a process of drying the laundry in a manner of being extendable from the front panel 110.

In this regard, the water storage tank 120 may collect condensate generated during the drying cycle. Accordingly, the user may extend the water storage tank 120 from the cabinet 100, then remove the condensate, and then mount the water storage tank 120 back into the cabinet 100. Accordingly, the laundry treating apparatus of the present disclosure may be disposed in a place where a sewer or the like is not installed.

In one example, the water storage tank 120 may be disposed above the door 130. Accordingly, when extending the water storage tank 120 from the front panel 110, the user may bend a waist thereof relatively less, thereby increasing convenience of the user.

The drum 200 may be formed in an integral cylindrical shape, but may be manufactured in a form in which a drum body 210 including a circumferential surface is coupled with a drum rear surface 220 forming a rear surface.

An inlet 211 through which the laundry enters and exits may be defined at a front side of the drum body 210. The driver that rotates the drum may be connected to the drum rear surface 220 from the rear.

The drum body 210 may have a lift 213 that lifts the laundry inside upwards such that the laundry items accommodated therein may be mixed with each other as the drum body 210 rotates. When the drum 200 rotates, the laundry accommodated inside may repeat a process of ascending and descending by the lift 213. The laundry accommodated inside the drum 200 may be evenly in contact with hot air while repeatedly ascending and descending. Therefore, a drying efficiency is increased and a drying time is shortened.

A reinforcing bead 212 may be formed on the circumferential surface of the drum body 210. The reinforcing bead 212 may be recessed inwards or protrude outwards along the circumferential surface of the drum 200. The reinforcing bead 212 may increase rigidity of the drum body 210.

Accordingly, the laundry treating apparatus of the present disclosure may further include a support 400 that fixes or supports the drum 200 or the driver within the cabinet 100.

The support 400 may include a front plate 410 disposed in front of the drum 200 and a rear plate 420 disposed in the rear of the drum 200. The front plate 410 and the rear plate 420 may be formed in a plate shape and arranged to respectively face front and rear surfaces of the drum 200. The front plate 410 and the rear plate 420 may be fixed and supported on a bottom surface of the cabinet 100 or the base 800.

The front plate 410 may be disposed between the front panel 110, which forms the front surface of the cabinet 100, and the drum 200. Additionally, the front plate 410 may have an input communication hole 412 that is in communication with the inlet 211.

The front plate 410 may include a duct connecting portion 416 disposed under the input communication hole 412. The duct connecting portion 416 may form a lower side of the front plate 410.

The front plate 410 may include a duct communication hole 417 extending through the duct connecting portion 416. The duct communication hole 417 may be formed in a hollow shape and may guide air discharged via the inlet 211 of the drum to the circulation flow channel 820 located below the drum 200. A filter (not shown) 417 to filter lint or foreign substances with large particles generated from laundry may be installed in the duct communication hole.

At least one of the front plate 410 and the rear plate 420 may rotatably support the drum 200. At least one of the front plate 410 and the rear plate 420 may rotatably accommodate therein a front or rear end of the drum 200.

For example, the front side of the drum 200 may be rotatably supported by the front plate 410, and a rear side of the drum 200 may be spaced apart from the rear plate 420, but may be indirectly supported by the rear plate 420 by being connected to a motor 500. As a result, an area where the drum 200 is in contact with or rubs against the support 400 may be minimized and unnecessary noise or vibration may be prevented from occurring.

In one example, the drum 200 may be rotatably supported on both the front plate 410 and the rear plate 420.

One or more support wheels 415 that support the front side of the drum 200 may be disposed at the lower side of the front plate 410. The support wheel 415 may be rotatably disposed on a rear surface of the front plate 410. The support wheel 415 may be rotated while in contact with the lower side of the drum 200.

When the drum 200 is rotated by the driver, the drum 200 may be supported by a drum rotating shaft 6341 connected thereto from the rear. When the laundry is accommodated inside the drum 200, a load imposed on the drum rotating shaft 6341 by the laundry may increase. Therefore, there is a risk that the drum rotating shaft 6341 may be bent by the load.

When the support wheel 415 supports a front lower side of the drum 200, the load imposed on the drum rotating shaft 6341 may be reduced. Therefore, the drum rotating shaft 6341 may be prevented from bending and the noise may be prevented from occurring by the vibration.

The support wheels 415 may be located at locations to be symmetrical to each other with respect to a rotation center of the drum 200 and support the load of the drum 200. It is preferable that the support wheels 415 are respectively disposed at lower left and right sides of the drum 200 to support the drum 200. However, the present disclosure may not be limited thereto, and a greater number of support wheels 415 may be disposed depending on an operating environment of the drum 200.

In this regard, the circulation flow channel 820 is disposed to be in communication with the drum 200. Air discharged from the drum 200 may be supplied to the circulation flow channel 820. Additionally, air discharged from the circulation flow channel 820 may be supplied back to the drum 200.

The base 800 that is disposed below the drum 200 to provide a space where air inside the drum circulates or moisture contained in air is condensed, the motor 510, 520, and 540 that is located in the rear of the drum to provide rotational power to the drum, a speed reducer 600 that reduces a speed of the rotation of the motor and transmits the rotation to the drum, and a rear cover 430 that is coupled to the rear plate 420 to prevent the motor from being exposed to the outside.

The driver may include the motor 500 that provides power to rotate the drum 200. The driver may be directly connected to the drum 200 to rotate the drum 200. For example, the driver may be of a direct drive unit (DD) type. Accordingly, the driver may control a rotation direction of the drum 200 or a rotation speed of the drum 200 by directly rotating the drum 200, omitting components such as a belt and a pulley.

In one example, the driver may further include the speed reducer 600 that may increase torque while utilizing maximum output of the motor 500 by reducing an RPM. Additionally, the driver may include the drum rotating shaft 6341 that is connected to the drum 200 and rotates the drum 200.

The circulation flow channel 820 disposed in the base 800 may form a flow channel that circulates air inside the drum 200 and feeds the air back into the drum 200.

The circulation flow channel 820 may include an inlet duct 821 into which air discharged from the drum 200 flows, an outlet duct 823 that supplies air to the drum 200, and a flow duct 822 that connects the inlet duct 821 with the outlet duct 823.

When air is discharged from the front side of the drum 200, the flow duct 822 may be located at a front side of the circulation flow channel 820. Further, the outlet duct 823 may be located at a rear side of the circulation flow channel 820.

The outlet duct 823 may further include a blower 8231 that discharges air to the outside of the circulation flow channel 820. The blower 8231 may be disposed in the rear of the outlet duct 823. Air discharged via the blower 8231 may flow to the drum 200.

A duct cover 830 may be coupled to the circulation flow channel 820 from above to partially shield an open top surface of the circulation flow channel 820. The duct cover 830 may prevent air from leaking out of the circulation flow channel 820. In other words, the duct cover 830 may form one surface of the flow channel through which air circulates.

In addition, the heat exchanger assembly 900 disposed on the base 800 may include a first heat exchanger 910 disposed inside the circulation flow channel 820 to cool air, and a second heat exchanger 920 disposed inside the circulation flow channel 820 to heat air cooled by the first heat exchanger 910.

The first heat exchanger 910 may dehumidify air discharged from the drum 200, and the second heat exchanger 920 may heat the dehumidified air. The heated air may be supplied to the drum 200 again to dry the laundry accommodated in the drum 200.

The first heat exchanger 910 and the second heat exchanger 920 may be constructed as heat exchangers through which a refrigerant flows. When the heat exchangers 910 and 920 are constructed as the heat exchanger through which the refrigerant flows, the first heat exchanger 910 may be constructed as the evaporator and the second heat exchanger 920 may be constructed as the condenser. The refrigerant flowing along the first heat exchanger 910 and the second heat exchanger 920 may exchange heat with air discharged from the drum 200.

The heat exchanger assembly 900 may include a circulation flow channel fan 950 that is installed in the circulation flow channel 820 and generates air flow inside the circulation flow channel 820. Additionally, the heat exchanger assembly 900 may further include a circulation flow channel fan motor 951 that rotates the circulation flow channel fan 950. The circulation flow channel fan 950 may rotate by receiving rotational power from the circulation flow channel fan motor 951. When the circulation flow channel fan 950 operates, air dehumidified in the first heat exchanger 910 and heated in the second heat exchanger 920 may flow to the rear side of the drum 200.

The circulation flow channel fan 950 may be installed in one of the inlet duct 821, the flow duct 822, and the outlet duct 823. Because the circulation flow channel fan 950 is constructed to rotate, noise may occur when the circulation flow channel fan 950 operates. Therefore, it is preferable that the circulation flow channel fan 950 is disposed in the rear of the circulation flow channel 820.

The circulation flow channel fan 950 may be installed in the blower 8231. Additionally, the circulation flow channel fan motor 951 may be located in the rear of the blower 8231. When the circulation flow channel fan 950 is rotated by the circulation flow channel fan motor 951, air inside the circulation flow channel 820 may be discharged to the outside of the circulation flow channel 820 via the blower 8231.

It is preferable that the inlet 211 of the drum 200 is defined at a relatively high location for the user to easily withdraw the laundry located inside the drum 200, so that it may be preferable that the circulation flow channel 820 and the heat exchanger assembly 900 are disposed below the drum 200.

The rear plate 420 that guides air discharged from the circulation flow channel 820 to the drum 200 may be disposed in the rear of the drum 200. The rear plate 420 may be disposed to be spaced apart from the drum rear surface 220. The circulation flow channel 820 may receive air inside the drum 200 via the front plate 410 and supply air to the rum 200 via the rear plate 420. Air discharged from the circulation flow channel 820 may pass through the rear plate 420 and be guided to the drum 200.

The base 800 may further include a connector 850 that guides air discharged from the circulation flow channel 820 to the rear plate 420. The connector 850 may induce the discharged air to spread evenly throughout the rear plate 420.

The connector 850 may be installed on the blower 8231. That is, the connector 850 may guide air discharged from the blower 8231 to the rear plate 420. Hot air supplied to the rear plate 420 may flow into the drum 200 via the drum rear surface 220.

The drum 200 of the laundry treating apparatus of the present disclosure may not be rotated indirectly by being coupled to the belt or the like, but may be rotated by being directly connected to the driver located in the rear of the drum 200. Therefore, unlike a drum of an existing dryer, which is formed in a cylindrical shape with open front and rear surfaces, the rear surface of the drum of the laundry treating apparatus of the present may be shielded and may be directly coupled with the driver.

As described above, the drum 200 may include the drum body 210 that is formed in the cylindrical shape and accommodates the laundry therein, and the drum rear surface 220 that is coupled to the drum body 210 from the rear to form the rear surface of the drum.

The drum rear surface 220 may be constructed to shield the rear side of the drum body 210 and provide a coupling surface that is directly coupled to the driver. That is, the drum rear surface 220 may be connected to the driver and receive the rotational power to rotate an entirety of the drum 200. As a result, the front side of the drum body 210 may be formed with the inlet 211 into which the laundry is input, and the rear side thereof may be shielded by the drum rear surface 220.

The drum rear surface 220 may have a bushing 300 that connects the driver with the drum rear surface 220. The bushing 300 may be disposed on the drum rear surface 220 to form the rotation center of the drum 200. The bushing 300 may be formed integrally with the drum rear surface 220, but may be made of a material with greater rigidity or durability than that of the drum rear surface 220 to be firmly coupled to the rotating shaft that transmits the power. The bushing 300 may be seated on and coupled to the drum rear surface 220 so as to be coaxial with the rotation center of the drum rear surface 220.

The drum rear surface 220 may include a peripheral portion 221 coupled to an outer circumferential surface of the drum body 210 and a mounting plate 222 that is disposed inside the peripheral portion 221 and is able to be coupled to the driver. The bushing 300 may be seated on and coupled to the mounting plate 222. The rotating shaft that rotates the drum may be coupled to the mounting plate 222 via the bushing 300, which has an effect of being more firmly coupled. Additionally, deformation of the drum rear surface 220 may be prevented.

The drum rear surface 220 may include a suction hole 224 that extends through the drum rear surface 220 at a location between the peripheral portion 221 and the mounting plate 222 and allows spaces in front of and in the rear of the drum rear surface 220 to be in communication with each other. Hot air supplied via the circulation flow channel 820 may flow into the drum body 210 via the suction hole 224. The suction hole 224 may be defined as a plurality of holes defined through the drum rear surface 220 or may be formed as a mesh-shaped net.

The driver that rotates the drum 200 may be located in the rear of the rear plate 420. The driver may include the motor 500 that generates the rotational power and the speed reducer 600 that reduces the rotational power of the motor 500 and transmits the reduced power to the drum 200.

The motor 500 may be disposed in the rear of the rear plate 420. Further, the motor 500 may be coupled to the rear plate 420 from the rear via the speed reducer 600.

The speed reducer 600 may be fixed to a rear surface of the rear plate 420, and the motor 500 may be coupled to a rear surface of the speed reducer 600. That is, the rear plate 420 may provide a support surface on which the speed reducer 600 or the motor 500 is supported. However, the present disclosure may not be limited thereto, and the motor 500 may be coupled to the rear plate 420.

The base 800 may include the circulation flow channel 820 that is in communication with the drum 200 and receive air from the drum or discharge air to the drum.

The front plate 410 may include a front panel 411 that forms the front surface, and the input communication hole 412 defined to extend through the front panel 411 and in communication with the drum 200. The front plate 410 may have a front gasket 413 that is disposed on a rear surface of the front panel 411 and disposed to surround a radial outer side of the input communication hole 412 to accommodate therein a portion of the drum body 210.

The front gasket 413 may rotatably support the drum body 210 and may be disposed to be in contact with an outer or inner circumferential surface of the inlet 211. The front gasket 413 may prevent hot air inside the drum 200 from leaking to a space between the drum body 210 and the front plate 410. The front gasket 413 may be made of a plastic resin or an elastic material, and a separate sealing member may be additionally coupled to the front gasket 413 to prevent the laundry or hot air from escaping from the drum body 210 to the front plate 410.

In one example, the front plate 410 may include the duct communication hole 417 defined through an inner circumferential surface of the input communication hole 412. Additionally, the front plate 410 may include the duct connecting portion 416 that extends downwardly of the duct communication hole 417 and forms a flow channel that allows the drum body 210 and the circulation flow channel 820 to be in communication with each other.

The duct connecting portion 416 may be in communication with the drum body 210 via the duct communication hole 417, and air discharged from the drum body 210 may flow into the duct connecting portion 416 via the duct communication hole 417 and be guided to the circulation flow channel 820. Air discharged from the drum body 210 is guided to the circulation flow channel 820 by the duct connecting portion 416, thereby preventing air inside the drum from leaking.

The filter (not shown) that filters the foreign substances or the lint from air discharged from the drum 200 and prevent the foreign substances from flowing into the circulation flow channel 820 may be installed in the duct connecting portion 416.

The support wheel 415 that is rotatably installed on the rear surface of the front panel 411 to support the lower side of the drum 200 may be installed on the front plate 410. The support wheel 415 may support the front side of the drum 200 and prevent the rotating shaft connected to the drum from bending.

The front plate 410 may have a water storage tank support hole 414 defined through the front panel 411 and through which the water storage tank 120, which stores the condensate generated during the drying process therein, may be extended or supported. When the water storage tank support hole 414 is defined on the upper side, the user does not have to bend the waist thereof when withdrawing the water storage tank, thereby increasing the convenience of the user.

The drum 200 that accommodates the laundry therein may include the drum body 210 having the inlet 211 through which the laundry enters and exits defined at the front side thereof, and the drum rear surface 220 that forms the rear surface thereof.

The drum rear surface 220 may include the peripheral portion 221 connected to the drum body 210, the suction hole 224 defined inwardly of the peripheral portion 221 and extending through the drum rear surface 220, and the mounting plate 222 disposed at a rotation center of the drum rear surface 220 and coupled with the rotating shaft. Air may flow into the rear side of the drum via the suction hole 224.

The drum rear surface 220 may further include a reinforcing rib 225 extending from the peripheral portion 221 toward the rotation center. The reinforcing rib 225 may extend to avoid the suction hole 224. The reinforcing rib 225 has an effect of preventing a decrease in the rigidity of the drum rear surface 220 caused by the suction hole 224. The reinforcing rib 225 may extend radially from an outer circumferential surface of the mounting plate 222 toward an inner circumferential surface of the peripheral portion 221.

In addition, the drum rear surface 220 may further include a circumferential rib 227 extending in a circumferential direction of the drum rear surface 220 to connect the reinforcing ribs 225 to each other. Each suction hole 224 may be defined between each reinforcing rib 225, the circumferential rib 227, and the peripheral portion 221. The reinforcing rib 225 and the circumferential rib 227 may prevent the drum rear surface 220 from being deformed even when the rotational power is transmitted from the motor 500.

The inlet duct 821 may be in communication with the duct communication hole 417 of the front plate 410 so as to be in communication with the flow channel installed inside the front plate 410. The flow duct 822 may extend from a distal end of the inlet duct 821 toward the rear side of the drum 200, and the outlet duct 823 may be disposed at a distal end of the flow duct 822 to guide air to the drum 200.

The blower 8231 may be located on a downstream side of the outlet duct 823, and the blower 8231 may provide a space where the circulation flow channel fan is installed. When the circulation flow channel fan operates, air introduced into the inlet duct 821 may be discharged upwardly of the blower 8231.

In one example, the heat exchanger assembly 900 that may cool and heat air circulating inside the drum 200 may be installed on the base 800. The heat exchanger assembly 900 may include a compressor 930 that is connected to the first heat exchanger and the second heat exchanger and supplies the compressed refrigerant. The compressor 930 may be constructed so as not to directly exchange heat with circulating air, and thus, may be located outside the circulation flow channel 820.

Additionally, the heat exchanger assembly may include the circulation flow channel fan motor 951 that is supported in the rear of the blower 8231 and rotates the circulation flow channel fan. The circulation flow channel fan motor 951 may be coupled to the blower 8231 from the rear.

In one example, the laundry treating apparatus according to an embodiment of the present disclosure may further include the connector 850 that is coupled to the circulation flow channel 820 and guides hot air discharged from the circulation flow channel 820 to the rear side of the drum 200 or to the rear plate 420.

The connector 850 may be disposed on the outlet duct 823 to guide hot air heated by passing through the second heat exchanger 920 upwardly of the outlet duct 823. Additionally, the connector 850 may be coupled to an opening defined at an upper side of the blower 8231.

The connector 850 may define a flow channel therein. The connector 850 may evenly guide the flow of air generated by the circulation flow channel fan to the rear plate 420. That is, the connector 850 may be constructed such that an area size of the flow channel increases as a distance from the blower 8231 increases.

The rear plate 420 may be coupled to the base 800 or supported on the base 800 and positioned in the rear of the drum 200. The rear plate 420 may include a rear panel 421 located to face away from the front plate 410, and a duct 423 that is recessed in the rear panel 421 to define a flow channel through which air flows and guides air discharged from the circulation flow channel 820 to the drum.

The rear plate 420 may include a mounting portion 425 to which the driver is coupled or supported. The mounting portion 425 may be defined to extend through the rear panel 421 and may be defined in an inner circumferential surface of the duct 423. The mounting portion 425 may be spaced radially inward from the inner circumferential surface of the duct 423.

In this regard, the driver may mean a combination of the speed reducer 600 and the motor 500, as described above. Further, the driver may only mean the motor 500. In other words, the component that generates the power and transmits the rotational power to the drum may be referred to as the driver.

The driver may be mounted in the mounting portion 425. The mounting portion 425 may support the load of the driver. The driver may be connected to the drum 200 while being supported in the mounting portion 425.

The duct 423 may accommodate a portion of the drum rear surface 220 therein. The duct 423 may form a flow channel through which air flows together with the drum rear surface 220.

The driver may be installed in the mounting portion 425 to prevent interference with the duct 423. In other words, the driver may be disposed to be spaced radially inward from the inner circumferential surface of the duct 423. The driver may be installed in the mounting portion 425, but may be installed such that a rear side thereof is exposed to the outside and be cooled by external air.

The driver may include the motor 500 that provides the power to rotate the drum 200. The motor 500 may include a stator 510 that generates a rotating magnetic field, and a rotor 520 that is rotated by the stator 510.

The rotor 520 may be of an outer rotor type that accommodates the stator 510 therein and rotates along a circumference of the stator 510. In this regard, a driving shaft may be coupled to the rotor 520 and directly connected to the drum 200 through the stator 510 and the mounting portion 425. In this case, the rotor 520 may directly transmit the power to rotate the drum 200.

The rotor 520 may be coupled to the driving shaft via a washer 540. The washer 540 may perform a function of connecting the driving shaft with the rotor 520. Because a contact area between the rotor 520 and the driving shaft may be increased by the washer 540, the rotation of the rotor 520 may be transmitted more effectively.

The speed reducer 600 may connect the motor 500 with the drum 200. The speed reducer 600 may convert the power of the motor 500 to rotate the drum 200. The speed reducer 600 may be disposed between the motor 500 and the drum 200, and may receive the power of the motor 500, convert the power, and transmit the converted power to the drum 200. The speed reducer 600 may convert an RPM of the rotor into a small RPM, increase a torque value, and transmit the same to the drum 200.

Specifically, the speed reducer 600 may be coupled with the rotor 520 and may be coupled with the driving shaft that rotates together with the rotor 520. The speed reducer 600 may include a gear assembly inside that engages with the driving shaft and rotates to change an rpm of the driving shaft, but increase a torque, and the gear assembly may be coupled to the drum 200 to be connected to the drum rotating shaft that rotates the drum. Therefore, when a driving shaft 530 rotates, the drum rotating shaft may rotate at a smaller rpm than the driving shaft, but may rotate with a greater torque.

A performance of such speed reducer 600 may depend on whether the driving shaft and the drum rotating shaft may remain coaxial with each other. That is, when the driving shaft and the drum rotating shaft are misaligned from each other, there is a risk that coupling of components constituting the gear assembly inside the speed reducer 600 with at least one of the driving shaft and the drum rotating shaft may become loose or released. Therefore, the power of the driving shaft may not be properly transmitted to the drum rotating shaft or the driving shaft may idle.

Additionally, when the driving shaft and the drum rotating shaft are misaligned from each other even temporarily, gears inside the speed reducer 600 may be misaligned from and collide with each other, resulting in unnecessary vibration or noise.

In addition, when an angle at which the driving shaft and the drum rotating shaft are misaligned from each other increases even temporarily, there is a risk that the speed reducer 600 may completely deviate from a correct location thereof or be damaged.

To prevent such problem, it is desirable to fix the speed reducer 600 and the motor 500 to a support that maintains an original state thereof without deformation even when an external force is generated in laundry treating apparatuses equipped with the speed reducer.

Because the motor 500 is not fixed to other components of the laundry treating apparatus but is only fixed to the speed reducer 600, when the vibration or the external force is transmitted to the driver, and when the speed reducer 600 tilts or vibrates, the motor 500 may always tilt or vibrate simultaneously with the speed reducer 600.

As a result, the speed reducer 600 and the motor 500 may constitute one vibration system, and the speed reducer 600 and the motor 500 may remain fixed without moving relative to each other.

Among the components of the motor 500, the stator 510 may be directly coupled to and fixed to the speed reducer 600. Accordingly, a location where the driving shaft 530 is installed relative to the speed reducer 600 may not change. A center of the driving shaft 530 and a center of the speed reducer 600 may be aligned with each other, and the driving shaft 530 may rotate while remaining coaxial with the center of the speed reducer 600.

The speed reducer 600 may be coupled to and fixed to the rear plate 420. In this case, the speed reducer 600 will tilt or vibrate while coupled to the rear plate 420, so that the rear plate 420 may be seen as serving as a center of the vibration system including the speed reducer 600, the motor 500, and the drum 200. In this case as well, the motor 500 may not be directly coupled to the rear plate 420, but may be coupled and fixed only to the speed reducer 600.

Ultimately, the motor 500 and the drum 200 are coupled to the speed reducer 600, so that the motor 500 and the drum 200 may tilt in parallel with each other or vibrate simultaneously with respect to the speed reducer 600.

Because the driving shaft 530 rotates relative to the speed reducer 600 but is fixed to be prevented from tilting, and the stator 510 is also fixed to the speed reducer 600, a spacing between the stator 510 and the rotor 520 may always be maintained. As a result, a collision between the stator 510 and the rotor 520 may be prevented, and noise or vibration that may occur resulted from a change in the rotation center while the rotor 520 rotates the stator 510 may be fundamentally blocked.

The drum rotating shaft 6341 may extend from inside the speed reducer 600 toward the drum 200, and may vibrate together with the speed reducer 600 and tilt together with the speed reducer 600. That is, the drum rotating shaft 6341 may be constructed to only rotate in the speed reducer 600, and an installed location thereof may be fixed. As a result, the drum rotating shaft 6341 and the driving shaft 530 may always be disposed in parallel with each other and be coaxial with each other. In other words, a center of the drum rotating shaft 6341 and the center of the driving shaft 530 may be maintained aligned with each other.

In one example, a seal 450 may be disposed between the drum rear surface 220 and the rear plate 420. The seal 450 may seal a space between the drum rear surface 220 and the rear plate 420 such that air introduced into the duct 423 of the rear plate 420 does not leak to the outside but flows into the suction hole 224.

The seal 450 may be disposed on outer and inner surfaces of the duct 423. A first seal 451 may be disposed at a radial outer side of the duct 423 and a second seal 452 may be disposed at a radial inner side of the duct 423. The first seal 451 may prevent hot air from leaking radially outward in a space between the drum rear surface 220 and the duct 423, and the second seal 452 may prevent hot air from leaking radially inward in the space between the drum rear surface 220 and the duct 423.

In other words, the seal 450 may be disposed on radial outer and inner sides of the suction hole 224. The first seal 451 may be disposed at the radial outer side of the suction hole 224, and the second seal 452 may be disposed on the radial inner side of the suction hole 224.

To prevent hot air from leaking, the seal 450 is preferably disposed to be in contact with both the drum rear surface 220 and the rear plate 420. Because the drum 200 rotates during the operation of the laundry treating apparatus, continuous friction is applied to the seal 450 by the drum rear surface 220. Therefore, it will be desirable for the seal 450 to be made of a material that may seal the space between the drum rear surface 220 and the duct 423 without deteriorating a performance even by a frictional force and a frictional heat generated during the rotation.

In one example, the motor 500 or the speed reducer 600 may be coupled to the rear plate 420 from the rear. The rear plate 420 may be made of a thin steel plate material, so that there is a possibility that the rear plate 420 is bent or deformed by the load transmitted to the speed reducer 600 by the speed reducer 600 and the drum 200. That is, rigidity of the rear plate 420 needs to be secured to install the speed reducer 600, the motor 500, and the like.

To this end, the rear plate 420 may further include a bracket 700 for reinforcing coupling rigidity. The bracket 700 may be additionally coupled to the rear plate 420, and the speed reducer 600 and the motor 500 may be coupled to the rear plate 420 by the bracket 700.

The speed reducer 600 may be coupled with the bracket 700 and the rear plate 420 at the same time. The speed reducer 600, the rear plate 420, and the bracket 700 may be coupled to each other using a fastening member that extends therethrough at the same time. The rear plate 420 may be coupled with the bracket 700 to secure the rigidity. The rear plate 420, which has secured the rigidity, may be coupled with the speed reducer 600, the motor 500, and the like.

The speed reducer 600 may be coupled to the bracket 700 first, and then the bracket 700 may be coupled to the rear plate 420. In other words, the speed reducer may not be directly coupled to the rear plate 420, but may be fixed to the rear plate 420 via the bracket 700.

In one example, when the motor 500 or the speed reducer 600 is coupled to the rear plate 420 from the rear, the motor 500 and the speed reducer 600 may be exposed to the outside. Therefore, it is necessary to prevent the motor 500 from being exposed by being coupled to the rear plate 420 from the rear. Additionally, the duct 423 may be heated by hot air. Therefore, there may be a need to insulate a rear surface of the duct 423.

The rear cover 430 may be coupled to the rear plate 420 from the rear to prevent the duct 423 and the motor 500 or the speed reducer 600 from being exposed to the outside. The rear cover 430 may be disposed to be spaced apart from the duct 423 and the driver.

The rear cover 430 may prevent the motor 500 from being damaged by external interference or prevent the drying efficiency from being reduced as a heat loss occurs via the duct 423.

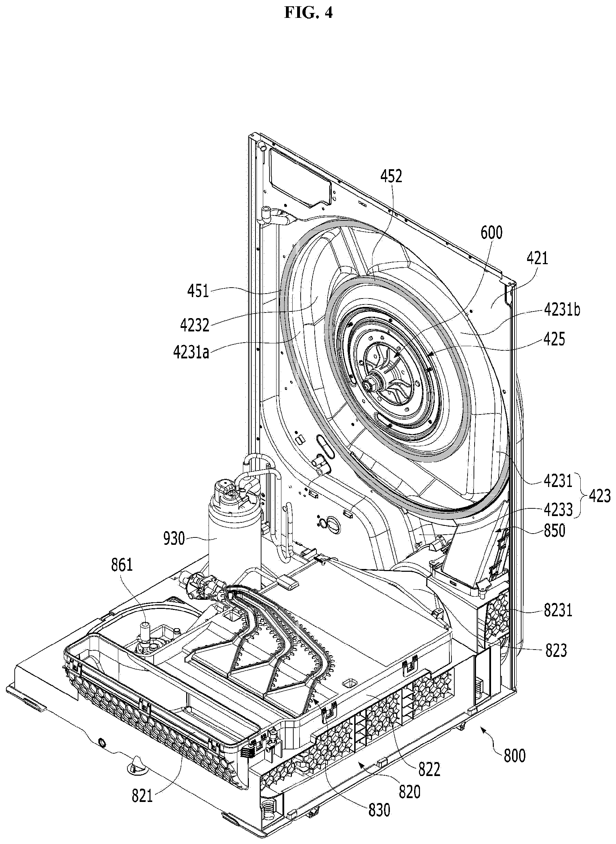

FIG. 4 is a perspective view showing a base and a rear plate according to an embodiment of the present disclosure.

Referring to FIG. 4, the rear plate 420 may be located in the rear of the drum. The rear plate 420 may guide hot air discharged from the circulation flow channel 820 to the drum. In other words, the rear plate 420 may be located in the rear of the drum and form a flow channel such that hot air is evenly supplied to the entire drum.

The rear plate 420 may include the rear panel 421 facing the drum rear surface, and the duct 423 that is recessed rearward from the rear panel 421 to form the flow channel. The duct 423 may be pressed rearward from the rear panel 421. The duct 423 may partially accommodate the drum rear surface therein.

The duct 423 may include an inlet portion 4233 located in the rear of the circulation flow channel and a flow portion 4231 located in the rear of the drum. The flow portion 4231 may accommodate a portion of the drum therein. The flow portion 4231 may partially accommodate the drum therein and form the flow channel disposed in the rear of the drum.

The flow portion 4231 may be formed in an annular shape to face the suction hole defined in the drum rear surface. The flow portion 4231 may be defined to be recessed in the rear panel 421. That is, the flow portion 4231 may be open at the front, and may form the flow channel together with the rear surface of the drum.

When the front side of the flow portion 4231 is open, hot air flowed to the flow portion 4231 may flow directly to the drum without passing through a separate component. Therefore, a heat loss, which occurs as hot air passes through the separate component, may be prevented. In other words, the heat loss of hot air may be reduced to increase the drying efficiency.

The rear plate 420 may include the mounting portion 425 defined on a radial inner side of the flow portion 4231. The mounting portion 425 may provide a space where the speed reducer 600 or the motor 500 is coupled. That is, the rear plate 420 may include the mounting portion 425 defined at an inner side thereof and the flow portion 4231 defined in the annular shape on a radial outer side of the mounting portion 425.

Specifically, the flow portion 4231 may include an outer circumferential flow portion 4231a that surrounds an inner space in which hot air flows from the outside. Additionally, the flow portion 4231 may include an inner circumferential flow portion 4231b that surrounds the inner space in which hot air flows from the inside. That is, the outer circumferential flow portion 4231a may form an outer circumference of the flow portion 4231, and the inner circumferential flow portion 4231b may form an inner circumference of the flow portion 4231.

Additionally, the flow portion 4231 may include a flow portion recessed surface 4232 that forms a rear surface of the flow channel through which hot air flows. The flow portion recessed surface 4232 may connect the outer circumferential flow portion 4231a with the inner circumferential flow portion 4231b. That is, a space in which hot air discharged from the circulation flow channel 820 flows may be defined by the inner circumferential flow portion 4231b, the outer circumferential flow portion 4231a, and the flow portion recessed surface 4232.

In addition, the flow portion recessed surface 4232 may prevent hot air from leaking rearwards and guide hot air toward the drum. That is, the flow portion recessed surface 4232 may mean a recessed surface of the flow portion 4231.

The inlet portion 4233 may be positioned to face the circulation flow channel 820. The inlet portion may be positioned to face the blower 8231. The inlet portion 4233 may be recessed rearwards from the rear panel 421 to prevent interference with the blower 8231. An upper side of the inlet portion 4233 may be connected to the flow portion 4231.

The laundry treating apparatus according to an embodiment of the present disclosure may include the connector 850 connected to the blower 8231. The connector 850 may guide hot air discharged from the blower 8231 to the flow portion 4231. The connector 850 may have a flow channel formed therein, thereby guiding hot air discharged from the blower 8231 to the flow portion 4231. That is, the connector 850 may form the flow channel that connects the blower 8231 with the flow portion 4231. A cross-sectional area of the flow channel formed inside the connector 850 may be increased as a distance from the blower 8231 increases.

The connector 850 may be positioned to face the inlet portion 4233. The inlet portion 4233 may be formed to be recessed rearwards to prevent interference with the connector 850. Additionally, an upper end of the connector 850 may divide the flow portion 4231 and the inlet portion 4233 from each other. That is, hot air discharged from the connector 850 may flow into the flow portion 4231, but may be prevented from flowing into the inlet portion 4233.

The connector 850 may evenly supply hot air to the flow portion 4231. The connector 850 may be constructed such that a width thereof increases as a distance from the blower 8231 increases. The upper end of the connector 850 may be located along a circumferential extension line of the outer circumferential flow portion 4231a.

Accordingly, hot air discharged from the connector 850 may not flow to the inlet portion 4233, but may be supplied to an entirety of the flow portion 4231. The connector 850 may prevent hot air from concentrating at one side of the flow portion 4231, thereby supplying hot air evenly into the drum. Therefore, the drying efficiency of the laundry is increased.

The connector 850 may be constructed such that the width thereof increases toward an upstream side, so that a speed of hot air flowing along the connector 850 may decrease along a flow direction. In other words, the connector 850 may perform a function of a diffuser that adjusts the speed of hot air. The connector 850 may reduce the speed of hot air, thereby preventing hot air from being supplied only to a specific portion of the drum in a concentrated manner.

Because of the shape of the connector 850 described above, the inlet portion 4233, which is disposed to face the connector 850 and is prevented from interfering with the connector 850, may also be constructed to increase in a width as a distance from the blower 8231 increases. Because of the shape of the inlet portion 4233, an overall shape of the duct 423 may be like a '9' when viewed from the front.

Because the drum 200 is constructed to rotate during the drying cycle, the drum 200 may be spaced apart from the flow portion 4231 by a predetermined distance. Hot air may leak out via the separation space.

Accordingly, the laundry treating apparatus may further include the seal 450 that prevents hot air from leaking into the separation space between the drum and the flow portion 4231. The seal 450 may be located along a circumference of the flow portion 4231.

The seal 450 may include the first seal 451 disposed along the outer circumference of the flow portion 4231. The first seal 451 may be disposed between the drum and the outer circumference of the flow portion 4231. In addition, the first seal 451 is disposed to be in contact with both the drum rear surface 220 and the rear plate 420, so that the leakage may be prevented more effectively.

In one example, the first seal 451 may be disposed to be in contact with a front surface of the connector 850. Additionally, the first seal 451 may be disposed in contact with the upper end of the connector 850. The connector 850 may form the flow channel through which hot air flows together with the flow portion 4231. Therefore, the first seal 451 may be disposed to be in contact with connector 850 to prevent hot air from leaking between the drum and the connector 850.

The seal 450 may include the second seal 452 disposed along the inner circumference of the flow portion 4231. The second seal 452 may be disposed between the drum and the inner circumference of the flow portion 4231. Additionally, the second seal 452 may be disposed to be in contact with both the drum rear surface 220 and the rear plate 420. The second seal 452 may prevent hot air flowing along the flow portion 4231 from leaking toward the mounting portion 425.

Because the drum 200 rotates during the operation of the laundry treating apparatus, the continuous friction is applied to the seal 450 by the drum rear surface 220. Therefore, it will be desirable for the seal 450 to be made of a material that may seal a space between the drum rear surface 220 and the flow portion 4231 without deteriorating the performance even by the frictional force and the frictional heat generated during the rotation.

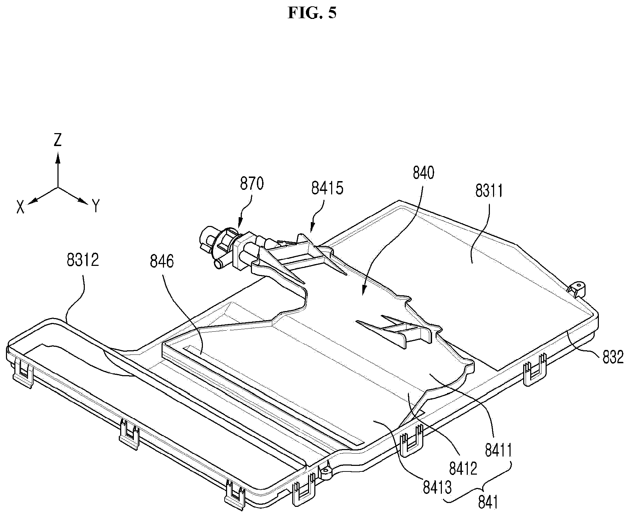

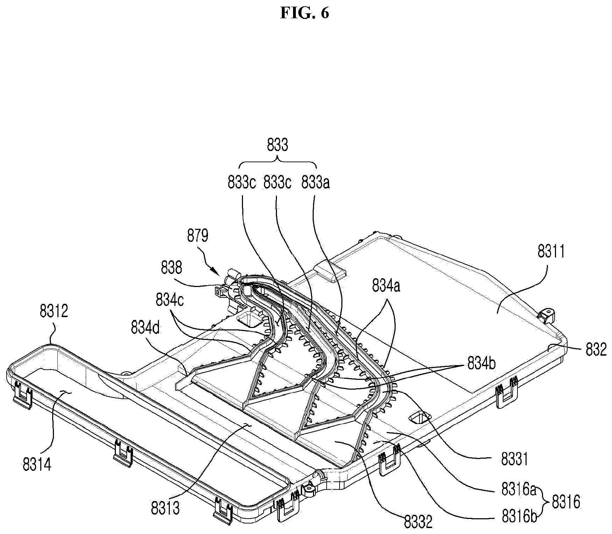

FIG. 5 is a perspective view showing a duct cover, a nozzle cover, and a flow channel switching valve according to an embodiment of the present disclosure, and FIG. 6 is a perspective view showing a duct cover according to an embodiment of the present disclosure.

On the circulation flow channel 820, there are the duct cover 830 that forms the flow channel through which air discharged from the drum flows, a nozzle cover 840 that is coupled to the duct cover 830 to form a flow channel for water supplied to wash the first heat exchanger 910, and a flow channel switching valve 870 that controls water supply to the duct cover.

The duct cover 830 may include a communicating cover body 8312 coupled onto the inlet duct 821, a shielding cover body 8311 coupled onto the flow duct 822, and a plurality of washing flow channels 833 disposed on a top surface of the shielding cover body 8311 and through which water may flow.

In this regard, the shielding cover body 8311 may extend from the communicating cover body 8312, and the washing flow channel 833 and the shielding cover body 8311 may be formed integrally with the communicating cover body 8312.

The nozzle cover 840 is to form a flow path for water supplied via the flow channel switching valve 870 by being seated on a top surface of the duct cover 830 and allow water to flow to the first heat exchanger 910.

Such nozzle cover 840 allows the flow channel for water between the duct cover 830 and the nozzle cover 840 to be formed to the first heat exchanger 910 by being in contact with a drum guide 8415 to restrict shaking of the drum 200 at a top surface thereof and in contact with the duct cover 830 at a bottom surface thereof.

In this regard, the flow channel switching valve 870 is coupled to the washing flow channel 833 and supply water required for the washing to the washing flow channel 833. The flow channel switching valve 870 may be connected to a water supply source (not shown) and selectively supply water to the washing flow channel 833.

The duct cover 830 may include the communicating cover body 8312 coupled to the upper side of the inlet duct 821 and the shielding cover body 8311 coupled to the upper side of the flow duct 822. The shielding cover body 8311 may extend from the communicating cover body 8312, and the shielding cover body 8311 may be formed integrally with the communicating cover body 8312.

The communicating cover body 8312 may include an inlet communication hole 8314 that allows the drum and the inlet duct 821 to be in communication with each other. Even when the communicating cover body 8312 is coupled to the inlet duct 821, the inlet communication hole 8314 may guide air discharged from the drum to the inlet duct 821.

In addition, the shielding cover body 8311 may shield a top surface of the flow duct 822, so that air introduced into the inlet duct 821 may not leak out of the circulation flow channel 820 via the flow duct 822, but may be guided to the outlet duct 823.

The shielding cover body 8311 may include the washing flow channel 833 disposed on a top surface thereof and through which water may flow. The washing flow channel 833 may receive water and spray water toward the first heat exchanger 910 located under the duct cover 830.

A cover through-hole 8313 extending through the shielding cover body 8311 in a vertical direction may be defined on a downstream side of the washing flow channel 833. Water flowing along the washing flow channel 833 may be sprayed downwardly of the shielding cover body 8311 via the cover through-hole 8313.

The first heat exchanger 910 that dehumidifies air discharged from the drum 200 may be disposed under the cover through-hole 8313. Accordingly, water that has passed through the cover through-hole 8313 may be sprayed toward the first heat exchanger 910 to wash the first heat exchanger 910.

The nozzle cover 840 may be coupled to an upper side of the washing flow channel 833. The nozzle cover 840 may shield an open top surface of the washing flow channel 833. The washing flow channel 833 may prevent air flowing along the flow duct 822 from leaking via the cover through-hole 8313.

The circulation flow channel 820 may further include a duct filter (not shown) disposed in front of the first heat exchanger 910 to filter the foreign substances from air that has passed through the inlet duct 821. The duct filter (not shown) may be disposed between the inlet duct 821 and the first heat exchanger 910 to prevent the foreign substances from being stacked on a front surface of the first heat exchanger 910.

The flow channel switching valve 870 that is coupled to the washing flow channel 833 and supplies water required for the washing to the washing flow channel 833 may be further included. The flow channel switching valve 870 may be connected to the water supply source and may selectively supply water to the washing flow channel 833. The water supply source may include a water collector 860.

In this regard, the water collector 860 may further include a separate water level sensor (not shown) to sense a water level of the condensate introduced into the water collector 860, and a condensate pump 861 that supplies the condensate introduced into the water collector 860 to the flow channel switching valve 870. Therefore, as the water level sensor senses a full water level, the condensate pump 861 may be operated to supply the condensate collected in the water collector 860 to the flow channel switching valve 870.

In one example, the water level sensor may include at least two electrodes (not shown) that are in contact with the condensate collected in the water collector 860 and sense when the full water level of the condensate. In sensing the full water level of the condensate as the condensate comes into contact with the electrodes, such water level sensor may sense a water level of the water collector 860 as a full water level as the condensate comes into contact with the electrodes at least 20 to 40 times for a certain period of 40 to 80 seconds. Specifically, for the water level sensor to sense the water level of the water collector 860 as the full water level, the condensate being sensed by the electrodes 30 times or more in 60 seconds may be determined as full water level information of the water collector 860.

In addition, the full water level information sensed by the water level sensor may be accumulated and integrated during a draining process of the condensate. The accumulation of such full water level information may be used as information to determine poor drainage of the water collector 860. In this regard, the integration of the full water level information to determine the poor drainage of the water collector 860 may be information obtained as the full water level is continuously sensed and accumulated over a certain period of time. Specifically, when the full water level of the water collector 860 is continuously sensed for 150 to 250 seconds (preferably, within 200 seconds), the poor drainage of the water collector 860 may be determined.

The flow channel switching valve 870 may be connected to the water collector 860 via a hose and guide water collected in the water collector 860 to the washing flow channel 833, or the flow channel switching valve 870 may guide water collected in the water collector 860 to the water storage tank 120.

In one example, the washing flow channel 833 may be disposed on the top surface of the shielding cover body 8311 and guide water introduced from a switcher connector 879 to the cover through-hole 8313. That is, the washing flow channel 833 may extend from the switcher connector 879 to the cover through-hole 8313.

In one example, the condensate supplied to the washing flow channel 833 via the switcher connector 879 may generate friction with an inner surface of the washing flow channel 833 while flowing along the washing flow channel 833, and a flow rate thereof may gradually decrease. Accordingly, the condensate inside the washing flow channel 833 may remain without being discharged from the washing flow channel 833.

To this end, the shielding cover body 8311 may include an inclined surface 8316 on which a portion of the top surface thereof is inclined and extends forward. At least a portion of the washing flow channel 833 may be disposed on the inclined surface 8316.

As a result, an amount of remaining water that has not been able to be discharged from the washing flow channel 833 may be minimized. Additionally, as water flowing through the washing flow channel 833 flows along the inclined surface 8316, a flow speed thereof naturally increases, thereby removing the foreign substances formed in the first heat exchanger 910.

For example, the inclined surface 8316 may include a first inclined surface 8316a that is inclined and extends forward from the top surface of the shielding cover body 8311, and a second inclined surface 8316b that is inclined and extends from the first inclined surface 8316a toward the communicating cover body 8312. The first inclined surface 8316a may extend with a greater inclination than the second inclined surface 8316b.

The plurality of washing flow channels 833 may include a first washing flow channel 833a disposed closest to one end of the shielding cover body 8311, a second washing flow channel 833b disposed closest to the other end of the shielding cover body 8311 among the plurality of washing flow channels 833, and a third washing flow channel 833c disposed between the first washing flow channel 833a and the second washing flow channel 833b.

In addition, each of the washing flow channels 833a, 833b, and 833c may include a guide flow channel 8331 that is in communication with the switcher connector 879 and supplies water from the switcher connector 879, and a discharge flow channel 8332 that is connected to the guide flow channel 8331 and extends to the cover through-hole 8313.

The guide flow channel 8331 may be disposed on the top surface of the shielding cover body 8311 formed higher than the inclined surface 8316, and the discharge flow channel 8332 may be disposed on the inclined surface 8316.

A distal end of the first washing flow channel 833a may be connected to one end of the cover through-hole 8313, and a distal end of the second washing flow channel 833b may be connected to the other end of the cover through-hole 8313. The first washing flow channel 833a, the second washing flow channel 833b, and the third washing flow channel 833c may be constructed to selectively supply water by the flow channel switching valve 870.

In one example, the washing flow channel 833 may include a flow channel forming portion 834 that forms a flow channel through which water introduced into a valve communication hole 8382 may flow to the cover through-hole 8313. The flow channel forming portion 834 may protrude from the top surface of the shielding cover body 8311 and may be formed integrally with the shielding cover body 8311.

The flow channel forming portion 834 may extend from the valve communication hole 8382 toward the cover through-hole 8313. That is, the flow channel forming portion 834 may form an inner circumferential surface of the washing flow channel 833.

Specifically, the flow channel forming portion 834 may form an inner circumferential surface of the guide flow channel 8331 and an inner circumferential surface of the discharge flow channel 8332. Additionally, the flow channel forming portion 834 may form the inner circumferential surface of the discharge flow channel 8332.

In one example, the flow channel forming portion 834 may include a first flow channel forming portion 834a forming an inner circumferential surface of the first washing flow channel 833a, a second flow channel forming portion 834b forming an inner circumferential surface of the second washing flow channel 833b, and a third flow channel forming portion 834c forming an inner circumferential surface of the third washing flow channel 833c.

A distal end of the first flow channel forming portion 834a and a distal end of the third flow channel forming portion 834c may be in contact with each other, and the distal end of the first flow channel forming portion 834a and a distal end of the second flow channel forming portion 834b may be in contact with each other.

The flow speed of the condensate introduced into the guide flow channel 8331 via the flow channel switching valve 870 may naturally increase as it passes through the discharge flow channel 8332. Because liquid has a property of becoming narrower in a diameter as the flow speed increases as it flows, the washing flow channel 833 may be constructed such that a width thereof increases based on a direction in which the condensate flows, so that the condensate may be induced to spread widely at the distal end.

In addition, the discharge flow channel 8332 has a width greater than that of the guide flow channel 8331, so that water introduced from the guide flow channel 8331 to the discharge flow channel 8332 may be induced to be uniformly discharged. The width of the discharge flow channel 8332 may be greater than the width of the guide flow channel 8331.

Accordingly, the washing flow channel 833 may spray water evenly onto the front surface of the first heat exchanger 910, and as a result, water may be evenly supplied to the entire first heat exchanger 910.

In one example, extending flow channel forming portions 834d extending toward the cover through-hole 8313 may be further formed on the outermost first and third flow channel forming portions 834a and 834c forming the flow channels of the discharge flow channel 8332, respectively. The extending flow channel forming portion 834d may prevent the condensate flowing from the discharge flow channel 8332 to the cover through-hole 8313 from concentrating outside the cover through-hole 8313.

Hereinafter, the flow channel switching valve 870 of the present disclosure will be described in detail with reference to the attached drawings.

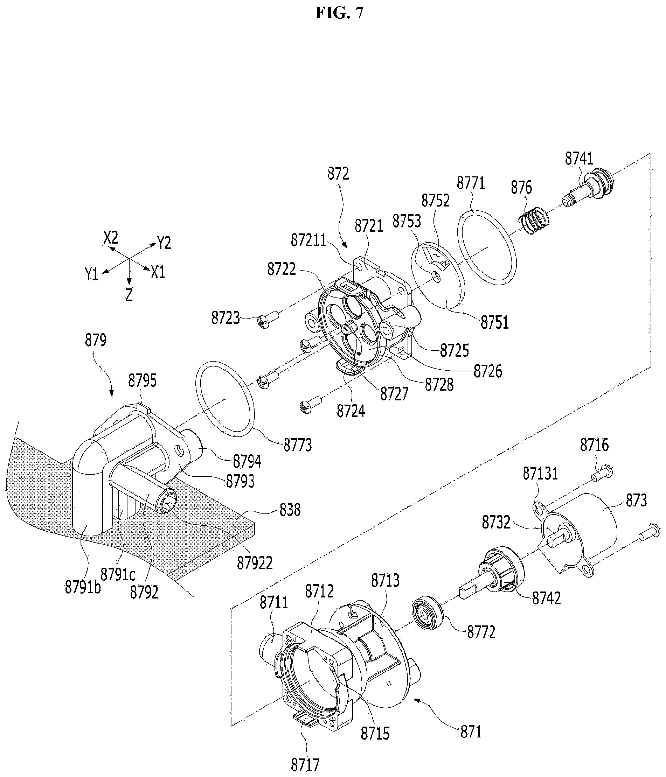

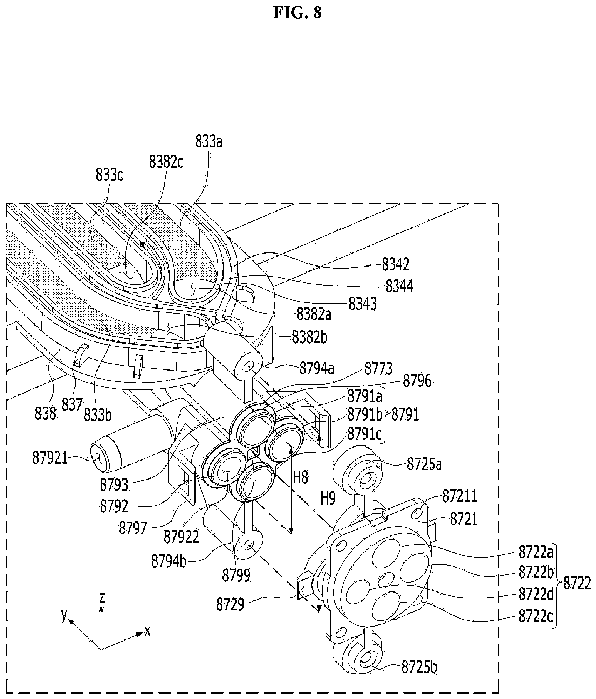

FIG. 7 is an exploded rear perspective view showing a flow channel switching valve according to an embodiment of the present disclosure, and FIG. 8 is an exploded perspective view showing coupling of a switcher connector and a transmitter in a laundry treating apparatus according to an embodiment of the present disclosure.

As shown in FIGS. 7 to 8, the flow channel switching valve 870 may include a supply switcher 871 that is in communication with the condensate pump 861 and receives the water from the condensate pump 861, the switcher connector 879 that is in communication with the supply switcher 871 and is connected to a valve connector 838 to deliver the water to the washing flow channel 833, and a transmitter 872 disposed between the supply switcher 871 and the switcher connector 879 and coupled to the supply switcher 871 and the switcher connector 879.

In one example, the switcher connector 879 may include a connector transmitting flow channel 8792 that is connected to the transmitter 872 and receives water from the transmitter 872. The connector transmitting flow channel 8792 may be in communication with the water storage tank 120 and may be a passage for water supplied from the transmitter 872 to flow to the water storage tank 120.

Accordingly, the water storage tank 120 may receive, via the connector transmitting flow channel 8792, water that has flowed from the condensate pump 861 to the flow channel switching valve 870 via the flow channel switching valve 870 and temporarily store the water.

In this case, the connector transmitting flow channel 8792 may have one end facing the transmitter and the other end facing the water storage tank 120.

Additionally, in the connector transmitting flow channel 8792, said one end and the other end may be arranged to be spaced apart from each other so as to be prevented from facing each other. In the connector transmitting flow channel 8792, said one end and the other end may be arranged so as to be prevented from facing each other in a straight line.

In one example, the supply switcher 871 may include a scroll accommodating portion 8712 coupled to the transmitter 872, and a switcher inlet portion 8711 connected to the water collector 860 from the scroll accommodating portion 8712.

The switcher inlet portion 8711 may be in communication with the inside of the scroll accommodating portion 8712 and receive water from the water collector 860 and allow water to flow into the scroll accommodating portion 8712.

In addition, the supply switcher 871 may include a driver installation portion 8713 that extends from the scroll accommodating portion 8712 to be away from the transmitter 872, a valve driver 873 installed in the driver installation portion 8713 to provide the rotational power, and a valve rotatable portion 874 disposed within the scroll accommodating portion 8712 and coupled to the valve driver 873 to rotate. The supply switcher 871 may include a driver fixing member 8716 that fixes the valve driver 873 to the driver installation portion 8713.

Additionally, the supply switcher 871 may include a switcher scroll 875 accommodated in the scroll accommodating portion 8712 and coupled to the valve rotatable portion 874 to rotate.

The valve rotatable portion 874 may include a second valve rotating shaft 8742 that is coupled to the valve driver 873 and rotates, and a first valve rotating shaft 8741 that is coupled to the second valve rotating shaft 8742 and the switcher scroll 875 and rotates.

In one example, the transmitter 872 may include a transmitter body 8721 to which the scroll accommodating portion 8712 is coupled, and a transmitter contact portion 8726 that extends toward the switcher connector 879 from the transmitter body 8721 and is coupled to the switcher connector 879.

In addition, the transmitter 872 may include a transmitter supply flow channel 8722 that extends through the transmitter body 8721 and the transmitter contact portion 8726 and is in communication with first, second, and third connector supply flow channels 8791a, 8791b, and 8791c.

The transmitter supply flow channel 8722 may include a plurality of transmitter supply flow channels along a circumference of the transmitter contact portion 8726, and the plurality of transmitter supply flow channels may be connected to the first, second, and third connector supply flow channels 8791a, 8791b, and 8791c and the connector transmitting flow channel 8792, respectively.

The switcher scroll 875 may include a switcher scroll plate 8751 that is accommodated in the scroll accommodating portion 8712 and rotates, a scroll communication hole 8752 that extends through the switcher scroll plate 8751 and is in selective communication with the plurality of transmitter supply flow channels 8722, and a scroll coupling groove 8753 that extends through the switcher scroll plate 8751 and to which the first valve rotating shaft 8741 is coupled.

The switcher scroll plate 8751 may rotate in contact with one end of the transmitter supply flow channel 8722, and the scroll communication hole 8752 may be in selective communication with one of the transmitter supply flow channels 8722 based on the rotation of the switcher scroll plate 8751.

Accordingly, water introduced into the switcher inlet portion 8711 based on the rotation of the switcher scroll plate 8751 may be selectively guided to the connector transmitting flow channel 8792 and the first, second, and third connector supply flow channels 8791a, 8791b, and 8791c.

When water is supplied to the connector transmitting flow channel 8792, water stored in the water collector 860 may flow to the water storage tank 120. Additionally, when water is supplied to one of the first, second, and third connector supply flow channels 8791a, 8791b, and 8791c, water may be supplied to one of the washing flow channels 833.

Accordingly, water may be selectively supplied to one of the water storage tank 120 or the washing flow channel 833 based on the operation of the flow channel switching valve 870. In addition, when water is supplied to one of the plurality of washing flow channels 833, a pressure of water discharged to the first heat exchanger 910 may be greater than that in a case in which water is continuously supplied to all of the plurality of washing flow channels 833.

In one example, when water supplied to the flow channel switching valve 870 leaks to a space between the switcher connector 879 and the valve connector 838, various devices required for the operation of the laundry treating apparatus 1 may come into contact with water.

To prevent such problem, the first, second, and third connector supply flow channels 8791a, 8791b, and 8791c may be formed integrally with the valve connector 838. Accordingly, water may be prevented from leaking to the space between the switcher connector 879 and the valve connector 838.

The first, second, and third connector supply flow channels 8791a, 8791b, and 8791c may pass through a bottom surface of the valve connector 838 and be in communication with the washing flow channel 833. The first, second, and third connector supply flow channels 8791a, 8791b, and 8791c may extend primarily downward from the valve connector 838 and secondarily extend in a direction away from the valve connector 838.

The first, second, and third connector supply flow channels 8791a, 8791b, and 8791c may be formed downwardly of a top surface of the valve connector 838. The connector supply flow channels 8791a, 8791b, and 8791c may pass through the valve connector 838 and respective one ends thereof may be inserted into the washing flow channel 833.

In one example, the switcher connector 879 may include a switcher extension 8793 extending from an outer circumferential surface of the connector transmitting flow channel 8792 and outer circumferential surfaces of the first, second, and third connector supply flow channels 8791a, 8791b, and 8791c.

The switcher extension 8793 may couple the connector transmitting flow channel 8792 with the first, second, and third connector supply flow channels 8791a, 8791b, and 8791c. The switcher extension 8793 may be formed integrally with the connector transmitting flow channel 8792 and the first, second, and third connector supply flow channels 8791a, 8791b, and 8791c, and may play a role in fixing the connector transmitting flow channel 8792 and the first, second, and third connector supply flow channels 8791a, 8791b, and 8791c.

In one example, the transmitter 872 may include a transmitter fastening portion 8725 that extends from an outer circumferential surface of the transmitter contact portion 8726 and is coupled to the switcher extension 8793. The switcher connector 879 may include a switcher fixing portion 8794 that extends from the switcher extension 8793 to the transmitter fastening portion 8725 and is coupled to the transmitter fastening portion 8725.

The switcher fixing portion 8794 and the transmitter fastening portion 8725 may face each other, and one end of the transmitter fastening portion 8725 may be accommodated ini and coupled to the switcher fixing portion 8794. As shown in the drawing, the switcher fixing portions 8794 may be disposed at one side and the other side of the switcher extension 8793, and the transmitter fastening portions 8725 may be disposed at one side and the other side of the transmitter contact portion 8726 to face the switcher fixing portions 8794, respectively.

Additionally, the switcher connector 879 may include a connector protrusion 8795 that protrudes from an outer circumferential surface of the switcher extension 8793 and is disposed to be spaced apart from the switcher fixing portion 8794. Additionally, the transmitter 872 may include a transmitter mounting hook 8724 extending from an outer circumferential surface of the transmitter contact portion 8726 and into which the connector protrusion 8795 is inserted.

The transmitter mounting hook 8724 may be disposed at a location corresponding to the connector protrusion 8795 and be coupled to the connector protrusion 8795. For example, as shown in the drawing, the connector protrusions 8795 may be formed to protrude at one side and the other side in a height direction of the switcher extension 8793 (a Z direction), respectively, and the transmitter mounting hooks 8724 may be disposed at one side and the other side in a height direction of the transmitter contact portion 8726 (the Z direction).

As a result, the transmitter 872 may be coupled to the switcher extension 8793 via the connector protrusion 8795 and the switcher fixing portion 8794, and the transmitter 872 may be prevented from being separated from the switcher extension 8793.

Additionally, the transmitter 872 may include a transmitter protrusion 8727 that protrudes from a center of the transmitter contact portion 8726 toward the switcher extension 8793 and is inserted into the switcher extension 8793. The transmitter protrusion 8727 may be inserted into the switcher extension 8793 to prevent the transmitter 872 from deviating from the switcher connector 879.

In one example, the transmitter 872 may include a transmitter body fixing member 8723 that fixes the scroll accommodating portion 8712 to the transmitter body 8721, and the scroll accommodating portion 8712 may include a supply switching fixing groove 8715 into which the transmitter body fixing member 8723 is inserted. Additionally, the supply switcher 871 may have a protruding supply switching hook 8717 extending from an outer circumferential surface of the scroll accommodating portion 8712 and coupled to the transmitter body 8721.

In one example, the flow channel switching valve 870 may include a connector sealing member 8773 disposed between the switcher connector 879 and the transmitter 872. The connector sealing member 8773 may be disposed between the switcher extension 8793 and the transmitter contact portion 8726 to prevent water between the first, second, and third connector supply flow channels 8791a, 8791b, and 8791c and the transmitter supply flow channel 8722 from leaking.

The connector sealing member 8773 may be accommodated in one of the transmitter contact portion 8726 and the switcher extension 8793. The connector sealing member 8773 may be disposed to surround the first, second, and third connector supply flow channels 8791a, 8791b, and 8791c.

A switcher seal 877 may include a shaft sealing member 8772 that is disposed between the second valve rotating shaft 8742 and the first valve rotating shaft 8741 to prevent water from leaking toward the valve driver 873, and a scroll sealing member 8771 that surrounds an outer circumferential surface of the switcher scroll plate 8751 and prevents water from leaking toward a space between the scroll accommodating portion 8712 and the transmitter body 8721.

A flow channel switching elastic member 876 that pressurizes the switcher scroll 875 in a direction away from the first valve rotating shaft 8741 may be included between the switcher scroll 875 and the first valve rotating shaft 8741.

The flow channel switching valve 870, as described above, may drain the condensate by switching the flow channel of the condensate to the connector transmitting flow channel 8792 as the condensate is collected in the water collector 860 and the full water level is sensed by the water level sensor or may wash the first heat exchanger 910 by switching the flow channel of the condensate to the first, second, and third connector supply flow channels 8791a, 8791b, and 8791c.

In one example, the lint may flow along with the drying of the laundry in the condensate stored in the water collector, and may flow into the flow channel switching valve 870. The lint introduced into the flow channel switching valve 870 may block the rotation of the switcher scroll 875 by being caught between the switcher scroll 875 and the supply switcher 871 and the transmitter 872 with the switcher scroll 875 interposed therebetween of the flow channel switching valve 870.

When the lint is caught between the switcher scroll 875 and the supply switcher 871 and the transmitter 872 with the switcher scroll 875 interposed therebetween as such, the flow channel switching of the connector transmitting flow channel 8792 and the first, second, and third connector supply flow channels 8791a, 8791b, and 8791c by the switcher scroll does not proceed smoothly.

Therefore, the flow channel switching valve 870 may have a stopper (not shown) that limits the rotation of the switcher scroll 875 at one side of the supply switcher 871 or the transmitter 872 to initialize a rotation location of the switcher scroll 875, and the valve driver 873 may initialize the location of the switcher scroll by rotating the switcher scroll 875 in one direction such that at least three of the connector transmitting flow channel 8792 and the first, second, and third connector supply flow channels 8791a, 8791b, and 8791c are passed.

In this regard, when the lint is caught between the switcher scroll 875 and the supply switcher 871 and the transmitter 872 with the switcher scroll 875 interposed therebetween, the lint blocks the rotation of the switcher scroll 875, causing the same effect as the switcher scroll 875 being caught in the stopper, so that the initialization of the switcher scroll 875 does not proceed smoothly.

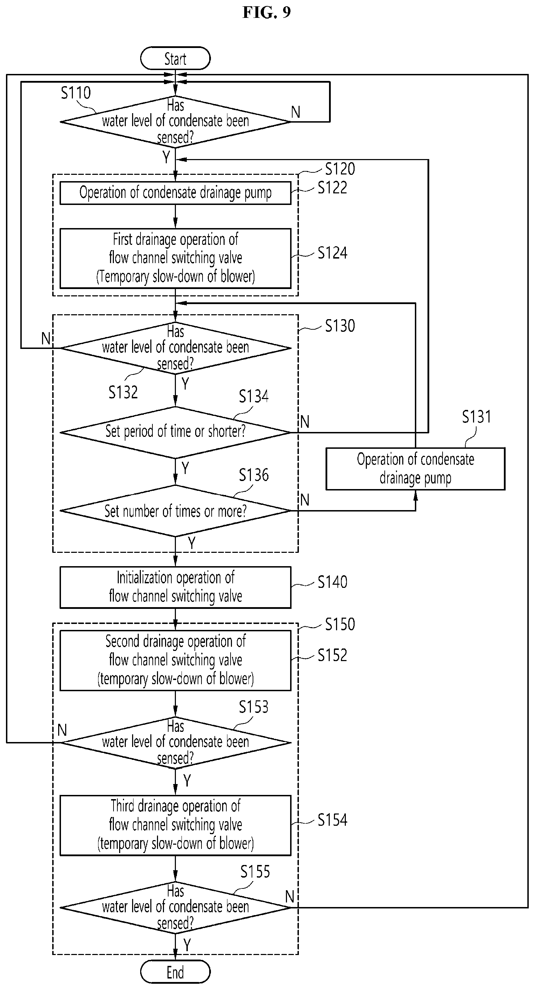

Hereinafter, the operation of the flow channel switching valve will be described in detail with reference to the attached FIGS. 9 to 11.

In one example, the laundry treating apparatus of the present disclosure is related to a dryer that dries the laundry, and a drying process may be similar to a general drying process. Therefore, a detailed description of the drying process will be omitted.

In addition, a condensate treatment process to be described below should be understood based on the structure of the laundry treating apparatus described above, and it may be seen that the laundry treating apparatus including the condensate treatment process below is within the technical scope of the present disclosure.

As shown in FIG. 9, a condensate treatment process according to an embodiment of the present disclosure may include a first water level sensing step (S110) of sensing when the water level of the condensate in the water collector 860 reaches the full water level, a first drainage step (S120) of draining the condensate as the full water level is sensed in the first water level sensing step (S110), a second water level sensing step (S130) of performing additional full water level sensing after the first drainage step (S120), a flow channel switching valve initialization step (S140) of setting an initial location of the flow channel switching valve 870 when the full water level is continuously sensed in the second water level sensing step (S130), and a second drainage step (S150) of draining the condensate after the flow channel switching valve initialization step (S140).

In the first water level sensing step (S110), as the drying cycle progresses, the condensate generated in the first heat exchanger 910 may be collected into the water collector 860, and the water level sensor of the water collector 860 may sense the full water level of the condensate introduced into the water collector 860.

In one example, the water level sensor may sense the water level of the water collector 860 as the full water level when the condensate collected in the water collector is sensed by the electrode of the water level sensor a certain number of times (hereinafter, referred to as 'first water level sensing number of times') or more for a certain period of time (hereinafter, referred to as a 'first water level sensing time period'). In the present embodiment, for the water level sensor to sense the water level of the water collector 860 as the full water level, when the condensate is sensed by the electrode 30 times or more in 60 seconds, it may be determined that the water collector 860 is full. However, conditions for sensing the full water level may vary depending on a storage space, a storage speed, and the like of the condensate collected in the water collector.

In this regard, the sensing of the water level of the water collector 860 may be performed at all times during the drying process, and when the water level of the water collector is not sensed as the full water level in the first water level sensing step (S110), the water level of the condensate may be sensed repeatedly. In addition, when the water level of the water collector is sensed as the full water level in the first water level sensing step (S110), the first drainage step (S120) of draining the condensate is performed.

The first drainage step (S120) may include a step (S122) of operating the condensate pump 861 of the water collector 860 as the water level of the condensate of the water collector 860 is sensed as the full water level, and a step (S124) of operating the flow channel switching valve 870 such that the condensate of the water collector 860 is drained. Such first drainage step (S120) may be repeated several times as the full water level of the water collector 860 is sensed.

In one example, in the first drainage step (S120), the operation of the blower 8231 may be temporarily stopped or reduced simultaneously with the operation of the condensate pump 861, thereby facilitating the operation of the flow channel switching valve 870. Normally, when the blower 8231 is operated, a negative pressure may be generated in the flow channel switching valve 870 located on an upstream side of the blower 8231 because of a blowing pressure of the blower 8231. In the case of the negative pressure generated in such flow channel switching valve 870, the negative pressure may be generated in the switcher scroll 875 of the flow channel switching valve 870 to increase a load applied to the rotation of the switcher scroll 875.

In other words, when the blower 8231 operates, a positive pressure is generated at a downstream side of air flowing by the blower 8231 (i.e., a side of the drum 200) based on the air flow by the blower 8231, and the negative pressure is generated at the upstream side of the blower 8231.

In this regard, the circulation flow channel 820 and the first and second heat exchangers 910 and 920 disposed in the circulation flow channel 820 are located on the upstream side of the blower 8231, and the flow channel switching valve 870 is connected to the washing flow channel 833 and the flow channel forming portion 834 located on an upstream side of the first heat exchanger 910.

Therefore, as the blower 8231 operates, the negative pressure may be generated in the circulation flow channel 820, the washing flow channel 833, and the flow channel forming portion 834, and the negative pressure may also be generated in the flow channel switching valve 870.

In one example, in the first drainage step (S120), as the operation of the blower is temporarily stopped or reduced, the negative pressure generated in the circulation flow channel 820, the washing flow channel 833, and the flow channel forming portion 834 may be temporarily reduced and eliminated, so that the flow channel switching valve 870 may operate smoothly.

In this regard, the flow channel switching valve 870 may allow the scroll communication hole 8752 of the switcher scroll 875 to rotate to a location corresponding to the connector transmitting flow channel 8792, so that the flow channel of the condensate is connected to the connector transmitting flow channel 8792.

In one example, an error may occur in the operation of the flow channel switching valve 870 in the first drainage step (S120). In other words, when the lint accumulates in the switcher scroll 875 or between the supply switcher 871 where the switcher scroll 875 is installed and the transmitter 872 and the switcher scroll 875 does not rotate smoothly, the switcher scroll 875 of the flow channel switching valve 870 may rotate such that the scroll communication hole 8752 and the connector transmitting flow channel 8792 do not match each other.

In this case, the condensate of the water collector 860 may not be drained to the connector transmitting flow channel 8792, and the condensate collected in the water collector 860 may overflow beyond the full capacity of the water collector 860 because of malfunction of the flow channel switching valve 870.

In one example, after the first drainage step (S120), the second water level sensing step (S130) of sensing the water level of the water collector 860 again to determine whether the flow channel switching valve 870 is operating normally may be performed.

In this regard, the second water level sensing step (S130) may include a step (S132) of sensing the water level of the water collector to sense that the water level of the water collector is equal to or higher than a set water level, and a continuous drainage step (S131) of draining the condensate when the water level of the water collector is sensed as the full water level.

In this regard, a step of sensing a period of time during which the water level is sensed after the continuous drainage step or a step of sensing the number of times (hereinafter, referred to as 'second water level sensing number of times') a step of sensing the water level within a certain period of time (hereinafter, referred to as a 'second water level sensing time period') occurs repeatedly after the continuous drainage step (S134 and S136) may be included.

In one example, as described above, when the flow channel switching valve 870 does not operate normally, the water level of the condensate may be maintained in the water collector 860. Therefore, whether the flow channel switching valve 870 is operating normally may be determined by repeatedly sensing the water level of the water collector 860 during the second water level sensing time period.

In this regard, when the water level of the water collector 860 is sensed to be equal to or lower than the set water level in the step (S132) of sensing that the water level of the water collector 860 is equal to or higher than the set water level, it may be determined that the flow channel switching valve 870 has operated normally and the condensate has been drained. In this case, after a certain period of time, the water level of the water collector 860 may be sensed again by switching to the first water level sensing step (S110).

In one example, the water level of the water collector 860 being sensed to be equal to or lower than the set water level in the step (S132) of sensing that the water level of the water collector 860 is equal to or higher than the set water level may be of a case in which the electrodes of the water level sensor disposed in the water collector has sensed the condensate for the first water level sensing time period the first water level sensing number of times, which is set for the electrodes, or less. In this case, it may be determined that the flow channel switching valve 870 has operated normally and the condensate has been drained.

In one example, when the water level of the water collector 860 is sensed to be equal to or higher than the set water level in the step (S132) of sensing that the water level of the water collector 860 is equal to or higher than the set water level, the steps (S134 and S136) of sensing the second water level sensing time period and the second water level sensing number of times for sensing the full water level of the water collector 860 may be performed.

In this regard, when the water level of the water collector 860 is continuously sensed as the full water level in the step (S134) of sensing the water level of the water collector 860 at regular intervals during the second water level sensing time period, it may be determined that the condensate of the water collector 860 has not been drained normally because of reasons such as the flow channel switching valve 870 not operating normally in the first drainage step (S120).

In one example, after the continuous drainage step (S131), in the step (S134) of sensing the water level of the water collector 860 at the regular intervals during the second water level sensing time period, water level information sensed by the water level sensor may be accumulated and integrated during the drainage process of the condensate. The accumulation of such full water level information may be used as the information to determine the poor drainage of the water collector 860. In this regard, the integration of the full water level information to determine the poor drainage of the water collector 860 may be the information obtained as the full water level is continuously sensed and accumulated over the second water level sensing time period.

Specifically, when a period of time it takes to sense the full water level of the water collector 860 again after the continuous drainage step (S131) is completed is sensed to be equal to or shorter than the second water level sensing time period (150 to 250 seconds, preferably, 200 seconds), and when the accumulated number of times the full water level is sensed reaches the second water level sensing number of times (at least once), the poor drainage of the water collector 860 may be determined.

In this regard, the second water level sensing number of times should not exceed 10. When the same exceeds 10, undrained water may present in the water collector 860, and the condensate additionally generated during the continuous drainage step (S131) may overflow to the outside of the water collector 860 as a water storage capacity of the water collector 860 is exceeded.

In addition, when the second water level sensing number of times is set to an excessively great number of times, it takes excessively much time to proceed with the second water level sensing step (S130) and the continuous drainage step (S131), so that excessively much time may be consumed in the drainage of the condensate, and ultimately, an overall operating time of the laundry treating apparatus may increase.

In this regard, in the step (S134) of sensing the water level of the water collector 860 at the regular intervals during the second water level sensing time period, when a period of time for the water level to be sensed as the full water level again after the continuous drainage step (S131) is completed is equal to or longer than the second water level sensing time period, and the accumulated number of times is sensed to be equal to or smaller than the second water level sensing number of times, the step (S132) of sensing that the water level of the water collector is equal to or higher than the set water level may be performed again.

In one example, when it is determined that the water collector 860 is not drained smoothly in the step (S134) of sensing the water level of the water collector 860 at the regular intervals during the second water level sensing time period, the flow channel switching valve initialization step (S140) may be performed.

The flow channel switching valve initialization step (S140) may initialize the location of the switcher scroll by rotating the switcher scroll 875 of the flow channel switching valve 870 in one direction until the rotation is blocked by the stopper.

That is, as the switcher scroll 875 is rotated in the one direction by the valve driver 873, the scroll communication hole 8752 of the switcher scroll 875 is rotated at a certain angle to correspond to the connector transmitting flow channel 8792 and the first, second, and third connector supply flow channels 8791a, 8791b, and 8791c.

In this regard, the stopper may be formed between the connector transmitting flow channel 8792 and the first connector supply flow channel 8791a, and the switcher scroll may be restricted by the stopper in rotation in a direction from the connector transmitting flow channel 8792 to the first connector supply flow channel 8791a (or rotation in a direction from the first connector supply flow channel 8791a to the connector transmitting flow channel 8792).

Therefore, when the valve driver 873 rotates the switcher scroll 875 in the direction from the connector transmitting flow channel 8792 to the first connector supply flow channel 8791a to pass through the remaining connector supply flow channels 8791b and 8791c, the rotation may be stopped by the stopper. In other words, as the valve driver 873 rotates the switcher scroll 875 in the one direction or the other to pass through all of the connector transmitting flow channel 8792 and the first, second, and third connector supply flow channels 8791a, 8791b, and 8791c, the initial location at which the switcher scroll 875 is stopped by the stopper may be set.

For example, when the connector transmitting flow channel 8792 and the first, second, and third connector supply flow channels 8791a, 8791b, and 8791c are arranged at an angle of 90 degrees, the valve driver 873 may set the initial location of the switcher scroll 875 by rotating the switcher scroll 875 450 degrees in the one direction or the other direction.

In this regard, in the flow channel switching valve initialization step (S140), the valve driver 873 may control the rotation of the switcher scroll such that the scroll communication hole 8752 defined in the switcher scroll 875 of the flow channel switching valve 870 is located in the connector transmitting flow channel 8792.

In one example, the second drainage step (S150) may proceed after the flow channel switching valve initialization step (S140). In this regard, the second drainage step (S150) may include a pre-drainage step (S152) of facilitating the operation of the flow channel switching valve 870 by temporarily deceleration the blower 8231 simultaneously with or during the operation of the condensate pump 861, and a post-drainage step (S154) of facilitating the operation of the flow channel switching valve 870 by stopping the operation of the blower 8231 for a certain period of time simultaneously with the operation of the condensate pump 861.

In this regard, a third water level sensing step (S153) of determining whether the condensate of the water collector 860 has been drained via the pre-drainage step (S152) may further be included between the pre-drainage step (S152) and the post-drainage step (S154), and a fourth water level sensing step (S155) of determining whether the condensate of the water collector has been drained via the post-drainage step (S154) may further be included after the post-drainage step (S154).

In one example, the pre-drainage step (S152) may temporarily slow down the blower 8231 to relieve the negative pressure applied to the flow channel switching valve 870 as the blower 8231 operates, so that the load applied to the flow channel switching valve 870 may be reduced to allow the switcher scroll 875 of the flow channel switching valve 870 to rotate smoothly. In this regard, a period of time for deceleration the blower 8231 in the pre-drainage step (S152) may be relatively shorter than a period of time for deceleration the blower 8231 in the first drainage step (S120) described above.

In this regard, after the pre-drainage step (S152), the third water level sensing step (S153) of determining whether the condensate of the water collector 860 has been drained in the pre-drainage step (S152) may be performed. In the third water level sensing step (S153), when the water level of the water collector 860 is sensed to be equal to or lower than the set water level, it may be determined that the flow channel switching valve 870 has operated normally and the condensate has been drained. In this case, after a certain period of time, the water level of the water collector 860 may be sensed again by switching to the first water level sensing step (S110).

In this regard, the water level of the water collector 860 being sensed to be equal to or lower than the set water level in the third water level sensing step (S153) may be of a case in which the electrodes of the water level sensor disposed in the water collector 860 has sensed the condensate for the first water level sensing time period the first water level sensing number of times, which is set for the electrodes, or less. In this case, it may be determined that the flow channel switching valve 870 has operated normally and the condensate has been drained in the pre-drainage step (S152).

In one example, in the third water level sensing step (S153), when the water level of the water collector 860 is sensed to be equal to or higher than the set water level within a certain period of time, the post-drainage step (S154) may be additionally performed.

In addition, the post-drainage step (S154) may stop the operation of the blower 8231 for a certain period of time to completely relieve the negative pressure applied to the flow channel switching valve 870, so that the load applied to the flow channel switching valve 870 may be removed to allow the switcher scroll 875 of the flow channel switching valve 870 to rotate smoothly.

In one example, after the post-drainage step (S154), the fourth water level sensing step (S155) of determining whether the condensate of the water collector 860 has been drained in the post-drainage step (S154) may be performed. In the fourth water level sensing step (S155), when the water level of the water collector 860 is sensed to be equal to or lower than the set water level for a certain period of time, it may be determined that the flow channel switching valve 870 has operated normally and the condensate has been drained in the post-drainage step (S154). In this case, after a certain period of time, the water level of the water collector 860 may be sensed again by switching to the first water level sensing step (S110).

In this regard, the water level of the water collector 860 being sensed to be equal to or lower than the set water level in the fourth water level sensing step (S155) may be of a case in which the electrodes of the water level sensor disposed in the water collector 860 has sensed the condensate for the first water level sensing time period the first water level sensing number of times, which is set for the electrodes, or less. In this case, it may be determined that the flow channel switching valve 870 has operated normally and the condensate has been drained.

In one example, when the water level of the water collector 860 is sensed to be equal to or higher than the set water level within a certain period of time in the fourth water level sensing step (S155), it is determined that the drainage of the condensate of the water collector 860 in the post-drainage step (S154) has not been performed.

In the case of such fourth water level sensing step (S155), it may be determined that the condensate of the water collector 860 has not been drained via the first and second drainage steps (S120 and S160) described above and an error has occurred in the condensate pump 861 of the water collector 860 or the flow channel switching valve 870.

Therefore, in the fourth water level sensing step (S155), when the water level of the water collector 860 is sensed to be equal to or higher than the set water level within a certain period of time, it may be determined that the condensate of the water collector has not been drained, and the condensate drainage operation and the operation of the laundry treating apparatus 1 may be stopped.

Therefore, according to the condensate treatment process according to an embodiment of the present disclosure as described above, whether the flow channel switching valve 870 is operating and the drainage state may be determined based on the sensing of the water level of the water collector 860, and the operation of the blower 8231 and the operation of the flow channel switching valve 870 may be controlled based on the determination of the drainage state to determine whether the condensate has been drained and the normal operation of the flow channel switching valve 870.

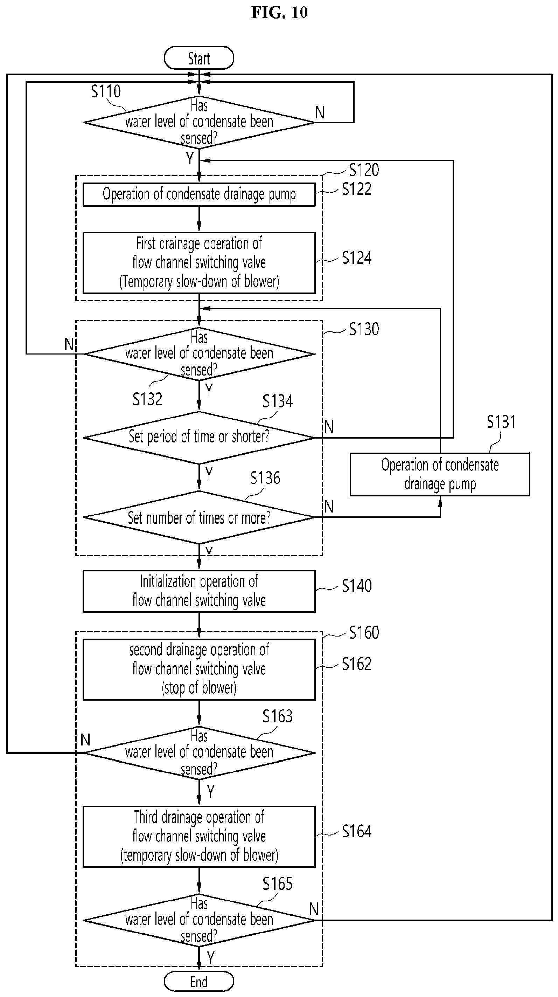

Hereinafter, a condensate treatment process according to another embodiment of the present disclosure will be described in detail with reference to the attached FIG. 10.

As shown in FIG. 10, the condensate treatment process according to another embodiment of the present disclosure may include the first water level sensing step (S110) of sensing the full water level of the condensate of the water collector 860, the first drainage step (S120) of draining the condensate based on the full water level being sensed in the first water level sensing step (S110), the second water level sensing step (S130) of performing the additional water level sensing after the first drainage step (S120), the flow channel switching valve initialization step (S140) of setting the initial location of the flow channel switching valve 870 when the full water level is continuously sensed in the second water level sensing step (S130), and the second drainage step (S160) of draining the condensate after the initialization step of the flow channel switching valve 870.

The condensate treatment process according to another embodiment of the present disclosure is the same as that in an embodiment of the present disclosure except for the second drainage step (S160). Therefore, a description of the same treatment process will be omitted and only the second drainage step (S160) will be described.

Another embodiment of the present disclosure may sequentially perform the second drainage step (S160) after the first water level sensing step (S110), the first drainage step (S120), the second water level sensing step (S130), and the flow channel switching valve initialization step (S140).

The second drainage step (S160) in another embodiment of the present disclosure may include a pre-drainage step (S162) of stopping the operation of the flow channel switching valve simultaneously with or during the operation of the condensate pump 861 and stopping the operation of the blower 8231 during the operation of the condensate pump 861, and a post-drainage step (S164) of temporarily deceleration the blower 8231 and then restoring the speed.

In this regard, a third water level sensing step (S163) of determining whether the condensate of the water collector 860 has been drained via the pre-drainage step(S162) may further be included between the pre-drainage step (S162) and the post-drainage step (S164), and a fourth water level sensing step (S165) of determining whether the condensate of the water collector has been drained via the post-drainage step(S164) may further be included after the post-drainage step (S164).

In addition, the pre-drainage step (S162) may stop the operation of the blower 8231 for a certain period of time to completely relieve the negative pressure applied to the flow channel switching valve 870, so that the load applied to the flow channel switching valve 870 may be removed to allow the switcher scroll 875 of the flow channel switching valve 870 to rotate smoothly.

In this regard, after the pre-drainage step (S162), the third water level sensing step (S163) of determining whether the condensate of the water collector 860 has been drained in the pre-drainage step (S162) may be performed. In the third water level sensing step (S163), when the water level of the water collector 860 is sensed to be equal to or lower than the set water level, it may be determined that the flow channel switching valve 870 has operated normally and the condensate has been drained. In this case, after a certain period of time, the water level of the water collector 860 may be sensed again by switching to the first water level sensing step (S110).

In this regard, the water level of the water collector 860 being sensed to be equal to or lower than the set water level in the third water level sensing step (S163) may be of a case in which the electrodes of the water level sensor disposed in the water collector 860 has sensed the condensate for the first water level sensing time period the first water level sensing number of times, which is set for the electrodes, or less. In this case, it may be determined that the flow channel switching valve 870 has operated normally and the condensate has been drained in the pre-drainage step (S162).

In one example, in the third water level sensing step (S163), when the water level of the water collector 860 is sensed to be equal to or higher than the set water level within a certain period of time, the post-drainage step (S164) may be additionally performed.

In one example, the post-drainage step (S164) may temporarily slow down the blower 8231 to relieve the negative pressure applied to the flow channel switching valve 870 as the blower 8231 operates, so that the load applied to the flow channel switching valve 870 may be reduced to allow the switcher scroll 875 of the flow channel switching valve 870 to rotate smoothly. In this regard, a period of time for deceleration the blower 8231 in the post-drainage step (S164) may be relatively shorter than the period of time for deceleration the blower 8231 in the first drainage step (S120) described above.

In one example, after the post-drainage step (S164), the fourth water level sensing step (S165) of determining whether the condensate of the water collector 860 has been drained in the post-drainage step (S164) may be performed. In the fourth water level sensing step (S165), when the water level of the water collector 860 is sensed to be equal to or lower than the set water level for a certain period of time, it may be determined that the flow channel switching valve 870 has operated normally and the condensate has been drained in the post-drainage step (S164). In this case, after a certain period of time, the water level of the water collector 860 may be sensed again by switching to the first water level sensing step (S110).

In this regard, the water level of the water collector 860 being sensed to be equal to or lower than the set water level in the fourth water level sensing step (S165) may be of a case in which the electrodes of the water level sensor disposed in the water collector 860 has sensed the condensate for the first water level sensing time period the first water level sensing number of times, which is set for the electrodes, or less. In this case, it may be determined that the flow channel switching valve 870 has operated normally and the condensate has been drained.

In one example, when the water level of the water collector 860 is sensed to be equal to or higher than the set water level within a certain period of time in the fourth water level sensing step (S165), it is determined that the drainage of the condensate of the water collector 860 in the post-drainage step (S164) has not been performed.

In the case of such fourth water level sensing step (S165), it may be determined that the condensate of the water collector 860 has not been drained via the first and second drainage steps (S120 and S160) described above and the error has occurred in the condensate pump 861 of the water collector 860 or the flow channel switching valve 870.

Therefore, in the fourth water level sensing step (S165), when the water level of the water collector 860 is sensed to be equal to or higher than the set water level within a certain period of time, it may be determined that the condensate of the water collector has not been drained, and the condensate drainage operation and the operation of the laundry treating apparatus 1 may be stopped.

That is, by stopping the operation of the blower 8231 during the switching operation of the flow channel switching valve 870 and the drainage operation of the condensate pump 861, the negative pressure applied to the flow channel switching valve 870 may be completely relieved, so that the load applied to the flow channel switching valve 870 and the negative pressure applied to the condensate pump 861 may be removed to allow the rotation of the switcher scroll 875 of the flow channel switching valve 870 and the condensate drainage by the condensate pump 861 to proceed smoothly.

Therefore, according to the condensate treatment process according to another embodiment of the present disclosure as described above, whether the flow channel switching valve 870 is operating and the drainage state may be determined based on the sensing of the water level of the water collector 860, and the operation of the blower 8231 and the operation of the flow channel switching valve 870 may be controlled based on the determination of the drainage state to determine whether the condensate has been drained and the normal operation of the flow channel switching valve 870.

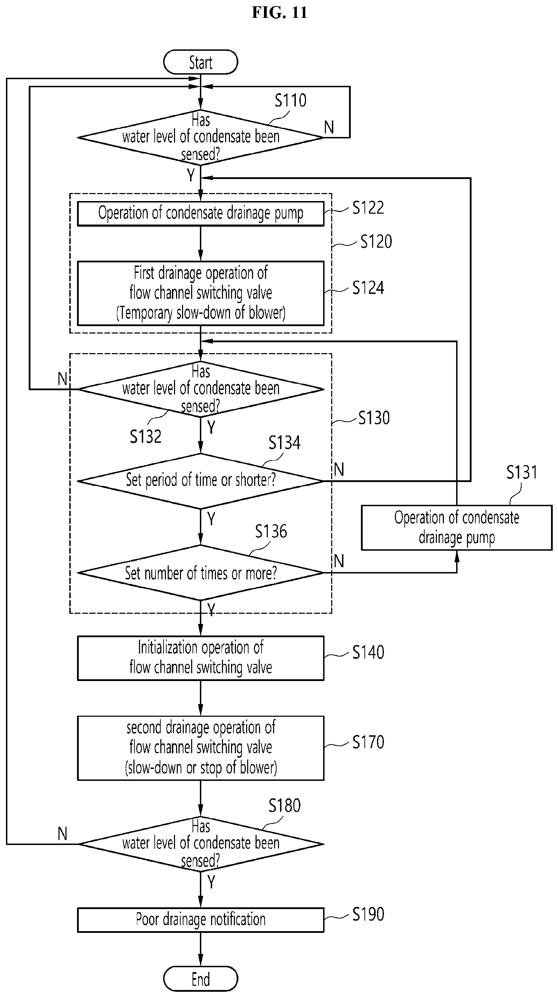

Hereinafter, a condensate treatment process according to still another embodiment of the present disclosure will be described in detail with reference to the attached FIG. 11.

As shown in FIG. 11, the condensate treatment process according to still another embodiment of the present disclosure may include the first water level sensing step (S110) of sensing the full water level of the condensate water level of the water collector 860, the first drainage step (S120) of draining the condensate as the full water level is sensed in the first water level sensing step (S110), the second water level sensing step (S130) of performing the additional water level sensing after the first drainage step (S120), the flow channel switching valve initialization step (S140) of setting the initial location of the flow channel switching valve 870 when the full water level is continuously sensed in the second water level sensing step (S130), a second drainage step (S170) of draining the condensate after the initialization step of the flow channel switching valve 870, a third water level sensing step (S180) of sensing the drainage of the condensate again after the second drainage step, and a notification step (S190) of notifying the poor condensate drainage based on the result of the third water level detection step (S180).

The condensate treatment process according to still another embodiment of the present disclosure is the same as that in an embodiment of the present disclosure except for the second drainage step (S170), the third water level sensing step (S180), and the notification step (S190). Therefore, a description of the same treatment process will be omitted and only the second drainage step (S170), the third water level detection step (S180), and the notification step (S190) will be described.

Still another embodiment of the present disclosure may sequentially perform the second drainage step (S170), the third water level sensing step (S180), and the notification step (S190) after the first water level sensing step (S110), the first drainage step (S120), the second water level sensing step (S130), and the flow channel switching valve initialization step (S140).

The second drainage step (S170) in still another embodiment of the present disclosure may stop or slow down the operation of the flow channel switching valve 870 simultaneously with the operation of the condensate pump 861, and stop or slow down the operation of the blower 8231 during the operation of the condensate pump 861, thereby facilitating the operation of the flow channel switching valve 870 and the discharge of the condensate by the condensate pump 861.

That is, by stopping the operation of the blower 8231 during the switching operation of the flow channel switching valve 870 and the drainage operation of the condensate pump 861, the negative pressure applied to the flow channel switching valve 870 may be relieved, so that the load applied to the flow channel switching valve 870 and the negative pressure applied to the condensate pump 861 may be removed to allow the rotation of the switcher scroll of the flow channel switching valve 870 and the condensate drainage by the condensate pump 861 to proceed smoothly.

In one example, the third water level detection step (S180) may determine whether the condensate drainage in the second drainage step (S170) has been progressed smoothly by sensing the water level of the water collector 860 after the second drainage step (S170) is ended.

In this regard, when the water level of the condensate sensed in the third water level detection step (S180) has been reduced to be lower than the set water level, it is determined that the drainage has progressed in the second drainage step (S170), and when the sensed water level of the condensate has not been reduced to be lower than the set water level within a certain period of time, it is determined that the drainage in the second drainage step (S170) has not progressed.

In this regard, the water level of the water collector 860 being sensed to be equal to or lower than the set water level in the third water level sensing step (S180) may be of a case in which the electrodes of the water level sensor disposed in the water collector 860 has sensed the condensate for the first water level sensing time period the first water level sensing number of times, which is set for the electrodes, or less. In this case, it may be determined that the flow channel switching valve 870 has operated normally and the condensate has been drained in the second drainage step (S170).

In one example, in the third water level detection step (S180), when the condensate drainage has not proceeded in the second drainage step (S170), the notification step (S190) of notifying the user of the poor condensate drainage may be further performed.

In this regard, the notification step (S19) may display the poor condensate drainage to the user via the display 119 of the manipulation panel 117. That is, the notification step (S190) may notify the user of the poor drainage using at least one of the display panel and the speaker disposed in the display 119.

Therefore, according to the condensate treatment process according to still another embodiment of the present disclosure as described above, whether the flow channel switching valve is operating and the drainage state may be determined based on the sensing of the water level of the water collector, and the operation of the blower and the operation of the flow channel switching valve may be controlled based on the determination of the drainage state to determine whether the condensate has been drained and the normal operation of the flow channel switching valve.

## Claims

1. A method for controlling a laundry treating apparatus including a drum (200) configured to receive an input object-to-be-dried therein, a blower (8321) configured to circulate air in the drum (200), a heat pump including a first heat exchanger (910) and a second heat exchanger (920) and configured to dehumidify/heat air, a water collector (860) configured to collect condensate generated from the first heat exchanger (910), a condensate pump (861) configured to drain the condensate of the water collector (860), and a flow channel switching valve (870) configured to switch a drain flow channel of the condensate or a flow channel for washing the first heat exchanger, the method comprising:
a first water level sensing step (S110) of sensing a water level of the water collector (860);
a first drainage step (S120) of deceleration operation of the blower (8321) for a certain period of time simultaneously with operation of the condensate pump (861) as the water level of the condensate of the water collector (860) is sensed as a full water level in the first water level sensing step (S110);
a second water level sensing step (S130) of sensing the number of times the water level of the water collector (860) reaches the full water level during a set period of time after the first drainage step (S120);
a flow channel switching valve initialization step (S140) of initializing a flow channel location of the flow channel switching valve (870) when the number of times the water level of the water collector (860) reaches the full water level within the set period of time is sensed to be equal to or greater than a set number of times in the second water level sensing step (S130); and
a second drainage step (S150) of draining the condensate by deceleration or stopping the operation of the blower (8321) for a certain period of time simultaneously with the operation of the condensate pump (861) after the flow channel switching valve initialization step (S140).

2. The method of claim 1, wherein the first water level sensing step (S110) includes determining the water level of the water collector (860) as the full water level when the water level of the water collector (860) is repeatedly sensed a first water level sensing number of times or more during a first water level sensing time period.

3. The method of claim 2, wherein the first drainage step (S120) further includes:
a pump operating step (S122) of operating the condensate pump (861); and
a blower deceleration step of temporarily deceleration the operation of the blower (8321) when the flow channel switching valve (870) is switched to a drainage location during the operation of the condensate pump (861).

4. The method of claim 2, wherein the second water level sensing step (S130) further includes a water level sensing step (S132) of sensing the water level of the water collector (860) after the first drainage step (S120),
wherein the first water level sensing step (S110) is performed after a certain period of time when the water level of the water collector (860) does not exceed a set water level in the water level sensing step (S132).

5. The method of claim 4, further comprising a varied water level sensing step of sensing a change in the water level of the water collector (860) when the water level of the water collector (860) exceeds the set water level in the water level sensing step (S132).

6. The method of claim 5, wherein the varied water level sensing step further includes a water level change sensing step of sensing that the water level of the water collector (860) changes during a second water level sensing time period.

7. The method of claim 6, wherein the varied water level sensing step includes: performing the water level sensing step again when the water level of the water collector (860) does not change within the second water level sensing time period; and
preferably a number of times the full water level is reached sensing step of sensing the number of times the water level of the water collector (860) is sensed as the full water level during the second water level sensing time period when the water level of the water collector (860) changes within the second water level sensing time period.

8. The method of claim 7, wherein the number of times the full water level is reached sensing step includes:
maintaining the operation of the condensate pump (861) when the water level of the water collector (860) is sensed as the full water level a second water level sensing number of times or less during the second water level sensing time period; and
preferably performing the flow channel switching valve initialization step (S140) when the water level of the water collector (860) is sensed as the full water level a second water level sensing number of times or more during the second water level sensing time period.

9. The method of claim 8, wherein the number of times the full water level is reached sensing step makes the determination based on the water level of the water collector (860) being sensed at least twice during the second water level sensing time period.

10. The method of claim 9, wherein the flow channel switching valve (870) includes the drain flow channel for draining the condensate, a plurality of washing flow channels (833) for the condensate to wash the first heat exchanger (910), a switcher scroll (875) configured to switch a rotation angle corresponding to the drain flow channel and the washing flow channels, and a stopper disposed between the drain flow channel and the washing flow channels (833) and configured to limit rotation of the switcher scroll (875),
wherein the flow channel switching valve initialization step (S140) includes rotating the switcher scroll (875) in one direction or the other direction, but controlling the rotation angle thereof such that the switcher scroll (875) passes a location of the drain flow channel or locations of the washing flow channels (833) adjacent to the stopper.

11. The method of claim 1, wherein the second drainage step (S150) further includes a blower stopping step of stopping the operation of the blower (8321) when the flow channel switching valve (870) is switched to a drainage location during the operation of the condensate pump (861).

12. The method of claim 1, wherein the second drainage step (S150) further includes a blower deceleration step of deceleration the operation of the blower (8312) when the flow channel switching valve (870) is switched to a drainage location during the operation of the condensate pump (861).

13. The method of claim 1, wherein the second drainage step (S150) includes at least one of a blower stopping step of stopping the operation of the blower (8312) when the flow channel switching valve (870) is switched to a drainage location during the operation of the condensate pump (861) and a blower slowing down step of slowing down the operation of the blower (8312).

14. The method of claims 11 to 13, further comprising, after the second drainage step (S150), a third water level sensing step (S180) of sensing the water level of the condensate drained in the second drainage step (S150),
wherein the third water level sensing step (S180) includes performing the first water level sensing step (S110) again when the water level of the water collector (860) is sensed to be equal to or lower than a set water level, and stopping operation of the laundry treating apparatus when the water level of the water collector (860) is sensed to be equal to or higher than the set water level.

15. The method of claim 14, further comprising a notification step (S190) of notifying a user when the water level of the water collector (860) is sensed to be equal to or higher than the set water level in the third water level sensing step (S180).

## Patentansprüche

1. Verfahren zum Steuern einer Wäschebehandlungsvorrichtung, die eine Trommel (200) aufweist, die so konfiguriert ist, dass sie ein zu trocknendes Eingabeobjekt darin aufnimmt, ein Gebläse (8321), das so konfiguriert ist, dass es Luft in der Trommel (200) zirkuliert, eine Wärmepumpe, die einen ersten Wärmetauscher (910) und einen zweiten Wärmetauscher (920) aufweist und so konfiguriert ist, dass sie Luft entfeuchtet/erwärmt, einen Wassersammler (860), der so konfiguriert ist, dass er Kondensat sammelt, das von dem ersten Wärmetauscher (910) erzeugt wird, eine Kondensatpumpe (861), die so konfiguriert ist, dass sie das Kondensat des Wassersammlers (860) ablässt, und ein Strömungskanal-Umschaltventil (870), das so konfiguriert ist, dass es einen Ablassströmungskanal für das Kondensat oder einen Strömungskanal zum Waschen des ersten Wärmetauschers umschaltet, wobei das Verfahren Folgendes aufweist:
einen ersten Wasserpegel-Erfassungsschritt (S110) zum Erfassen eines Wasserpegels des Wassersammlers (860);
einen ersten Ablassschritt (S120) zum Verzögern des Betriebs des Gebläses (8321) für eine bestimmte Zeitspanne gleichzeitig mit dem Betrieb der Kondensatpumpe (861), während der Wasserpegel des Kondensats des Wassersammlers (860) als ein voller Wasserpegel in dem ersten Wasserpegel-Erfassungsschritt (S110) erfasst wird;
einen zweiten Wasserpegel-Erfassungsschritt (S130) zum Erfassen der Häufigkeit, bei der der Wasserpegel des Wassersammlers (860) den vollen Wasserpegel während einer eingestellten Zeitspanne nach dem ersten Ablassschritt (S120) erreicht;
einen Strömungskanal-Umschaltventil-Initialisierungsschritt (S140) zum Initialisieren einer Strömungskanalposition des Strömungskanal-Umschaltventils (870), wenn die Häufigkeit, die der Wasserpegel des Wassersammlers (860) den vollen Wasserpegel innerhalb der eingestellten Zeitspanne erreicht, als gleich oder größer als eine eingestellte Häufigkeit in dem zweiten Wasserpegel-Erfassungsschritt (S130) erfasst wird; und
einen zweiten Ablassschritt (S150) zum Ablassen des Kondensats durch Verzögern oder Stoppen des Betriebs des Gebläses (8321) für eine bestimmte Zeitspanne gleichzeitig mit dem Betrieb der Kondensatpumpe (861) nach dem Strömungskanal-Umschaltventil-Initialisierungsschritt (S140).

2. Verfahren nach Anspruch 1, wobei der erste Wasserpegel-Erfassungsschritt (S110) das Bestimmen des Wasserpegels des Wassersammlers (860) als den vollen Wasserpegel aufweist, wenn der Wasserpegel des Wassersammlers (860) eine erste Wasserpegel-Erfassungshäufigkeit oder mehr während einer ersten Wasserpegel-Erfassungszeitspanne wiederholt erfasst wird.

3. Verfahren nach Anspruch 2, wobei der erste Ablassschritt (S120) ferner Folgendes aufweist:
einen Pumpenbetriebsschritt (S122) zum Betreiben der Kondensatpumpe (861); und
einen Gebläseverzögerungsschritt zur vorübergehenden Verzögerung des Betriebs des Gebläses (8321), wenn das Strömungskanal-Umschaltventil (870) während des Betriebs der Kondensatpumpe (861) in eine Ablassposition umgeschaltet wird.

4. Verfahren nach Anspruch 2, wobei der zweite Wasserpegel-Erfassungsschritt (S130) ferner einen Wasserpegel-Erfassungsschritt (S132) zum Erfassen des Wasserpegels des Wassersammlers (860) nach dem ersten Ablassschritt (S120) aufweist,
wobei der erste Wasserpegel-Erfassungsschritt (S110) nach einer bestimmten Zeitspanne durchgeführt wird, wenn der Wasserpegel des Wassersammlers (860) einen eingestellten Wasserpegel in dem Wasserpegel-Erfassungsschritt (S132) nicht überschreitet.

5. Verfahren nach Anspruch 4, ferner aufweisend einen veränderten Wasserpegel-Erfassungsschritt zum Erfassen einer Änderung des Wasserpegels des Wassersammlers (860), wenn der Wasserpegel des Wassersammlers (860) den eingestellten Wasserpegel in dem Wasserpegel-Erfassungsschritt (S132) überschreitet.

6. Verfahren nach Anspruch 5, wobei der veränderte Wasserpegel-Erfassungsschritt ferner einen Wasserpegeländerungs-Erfassungsschritt zum Erfassen aufweist, dass sich der Wasserpegel des Wassersammlers (860) während einer zweiten Wasserpegel-Erfassungszeitspanne ändert.

7. Verfahren nach Anspruch 6, wobei der veränderte Wasserpegel-Erfassungsschritt Folgendes aufweist: erneutes Durchführen des Wasserpegel-Erfassungsschritts, wenn sich der Wasserpegel des Wassersammlers (860) innerhalb der zweiten Wasserpegel-Erfassungszeitspanne nicht ändert; und
bevorzugt einen Erfassungsschritt, bei dem der volle Wasserpegel erreicht wird, zum Erfassen der Häufigkeit, bei der der Wasserpegel des Wassersammlers (860) als der volle Wasserpegel während der zweiten Wasserpegel-Erfassungszeitspanne erfasst wird, wenn sich der Wasserpegel des Wassersammlers (860) innerhalb der zweiten Wasserpegel-Erfassungszeitspanne ändert.

8. Verfahren nach Anspruch 7, wobei der Erfassungsschritt, bei dem der volle Wasserpegel erreicht wird, Folgendes aufweist:
Aufrechterhalten des Betriebs der Kondensatpumpe (861), wenn der Wasserpegel des Wassersammlers (860) als der volle Wasserpegel eine zweite Wasserpegel-Erfassungshäufigkeit oder weniger während der zweiten Wasserpegel-Erfassungszeitspanne erfasst; und
bevorzugt Durchführen des Strömungskanal-Umschaltventil-Initialisierungsschritts (S140), wenn der Wasserpegel des Wassersammlers (860) als der volle Wasserpegel eine zweite Wasserpegel-Erfassungshäufigkeit oder mehr während der zweiten Wasserpegel-Erfassungszeitspanne erfasst.

9. Verfahren nach Anspruch 8, wobei der Erfassungsschritt, bei dem der volle Wasserpegel erreicht wird, anhand des Wasserpegels des Wassersammlers (860) bestimmt wird, der mindestens zweimal während der zweiten Wasserpegel-Erfassungszeitspanne erfasst wird.

10. Verfahren nach Anspruch 9, wobei das Strömungskanal-Umschaltventil (870) den Ablassströmungskanal zum Ablassen des Kondensats aufweist, mehrere Waschströmungskanäle (833) für das Kondensat zum Waschen des ersten Wärmetauschers (910) aufweist, eine Umschaltschnecke (875) aufweist, die so konfiguriert ist, dass sie einen Drehwinkel umschaltet, der dem Ablassströmungskanal und den Waschströmungskanälen entspricht, und einen Stopper aufweist, der zwischen dem Ablassströmungskanal und den Waschströmungskanälen (833) angebracht und so konfiguriert ist, dass er die Drehung der Umschaltschnecke (875) begrenzt,
wobei der Strömungskanal-Umschaltventil-Initialisierungsschritt (S140) das Drehen der Umschaltschnecke (875) in die eine oder die andere Richtung aufweist, wobei jedoch der Drehwinkel derselben so gesteuert wird, dass die Umschaltschnecke (875) eine Position des Ablassströmungskanal oder Positionen der Waschströmungskanäle (833) benachbart zu dem Stopper passiert.

11. Verfahren nach Anspruch 1, wobei der zweite Ablassschritt (S150) ferner einen Gebläsestoppschritt zum Stoppen des Betriebs des Gebläses (8321) aufweist, wenn das Strömungskanal-Umschaltventil (870) während des Betriebs der Kondensatpumpe (861) in eine Ablassposition umgeschaltet wird.

12. Verfahren nach Anspruch 1, wobei der zweite Ablassschritt (S150) ferner einen Gebläseverzögerungsschritt zur Verzögerung des Betriebs des Gebläses (8312) aufweist, wenn das Strömungskanal-Umschaltventil (870) während des Betriebs der Kondensatpumpe (861) in eine Ablassposition umgeschaltet wird.

13. Verfahren nach Anspruch 1, wobei der zweite Ablassschritt (S150) mindestens einen der folgenden Schritte aufweist: einen Gebläsestoppschritt zum Stoppen des Betriebs des Gebläses (8312), wenn das Strömungskanal-Umschaltventil (870) während des Betriebs der Kondensatpumpe (861) in eine Ablassposition umgeschaltet wird, und einen Gebläseverlangsamungsschritt zum Verlangsamen des Betriebs des Gebläses (8312).

14. Verfahren nach einem der Ansprüche 11 bis 13, ferner aufweisend, nach dem zweiten Ablassschritt (S150), einen dritten Wasserpegel-Erfassungsschritt (S180) zum Erfassen des Wasserpegels des Kondensats, das in dem zweiten Ablassschritt (S150) abgelassen wird,
wobei der dritte Wasserpegel-Erfassungsschritt (S180) das erneute Durchführen des ersten Wasserpegel-Erfassungsschritts (S110) aufweist, wenn erfasst wird, dass der Wasserpegel des Wassersammlers (860) gleich oder niedriger als ein eingestellter Wasserpegel ist, und das Stoppen des Betriebs der Wäschebehandlungsvorrichtung, wenn erfasst wird, dass der Wasserpegel des Wassersammlers (860) gleich oder höher als der eingestellte Wasserpegel ist.

15. Verfahren nach Anspruch 14, ferner aufweisend einen Benachrichtigungsschritt (S190) zum Benachrichtigen eines Benutzers, wenn erfasst wird, dass der Wasserpegel des Wassersammlers (860) gleich oder höher als der eingestellte Wasserpegel in dem dritten Wasserpegel-Erfassungsschritt (S180) ist.

## Revendications

1. Procédé de commande d'un appareil de traitement de linge comportant un tambour (200) configuré pour recevoir un objet d'entrée à sécher à l'intérieur de celui-ci, une soufflante (8321) configurée pour faire circuler de l'air dans le tambour (200), une pompe à chaleur comportant un premier échangeur de chaleur (910) et un deuxième échangeur de chaleur (920) et configurée pour déshumidifier/chauffer de l'air, un collecteur d'eau (860) configuré pour collecter du condensat généré à partir du premier échangeur de chaleur (910), une pompe à condensat (861) configurée pour vidanger le condensat du collecteur d'eau (860), et une soupape de commutation de canal d'écoulement (870) configurée pour commuter un canal d'écoulement de vidange du condensat ou un canal d'écoulement pour laver le premier échangeur de chaleur, le procédé comprenant :
une première étape de détection de niveau d'eau (S110) de détection d'un niveau d'eau du collecteur d'eau (860) ;
une première étape de vidange (S120) de fonctionnement en décélération de la soufflante (8321) pendant une certaine période de temps simultanément avec le fonctionnement de la pompe à condensat (861) lorsque le niveau d'eau du condensat du collecteur d'eau (860) est détecté comme un niveau d'eau maximal lors de la première étape de détection de niveau d'eau (S110) ;
une deuxième étape de détection de niveau d'eau (S130) de détection du nombre de fois que le niveau d'eau du collecteur d'eau (860) atteint le niveau d'eau maximal pendant une période de temps définie après la première étape de vidange (S120) ;
une étape d'initialisation de soupape de commutation de canal d'écoulement (S140) d'initialisation d'un emplacement de canal d'écoulement de la soupape de commutation de canal d'écoulement (870) lorsque le nombre de fois que le niveau d'eau du collecteur d'eau (860) atteint le niveau d'eau maximal dans la période de temps définie est détecté comme étant supérieur ou égal à un nombre de fois défini dans la deuxième étape de détection de niveau d'eau (S130) ; et
une deuxième étape de vidange (S150) de vidange du condensat par décélération ou arrêt du fonctionnement de la soufflante (8321) pendant une certaine période de temps simultanément avec le fonctionnement de la pompe à condensat (861) après l'étape d'initialisation de soupape de commutation de canal d'écoulement (S140).

2. Procédé selon la revendication 1, dans lequel la première étape de détection de niveau d'eau (S110) comporte la détermination du niveau d'eau du collecteur d'eau (860) comme étant le niveau d'eau maximal lorsque le niveau d'eau du collecteur d'eau (860) est détecté de manière répétée un premier nombre de fois de détection de niveau d'eau ou plus pendant une première période de temps de détection de niveau d'eau.

3. Procédé selon la revendication 2, dans lequel la première étape de vidange (S120) comporte en outre :
une étape de fonctionnement de pompe (S122) pour faire fonctionner la pompe à condensat (861) ; et
une étape de décélération de soufflante de décélération temporaire du fonctionnement de la soufflante (8321) lorsque la soupape de commutation de canal d'écoulement (870) est commutée sur un emplacement de vidange pendant le fonctionnement de la pompe à condensat (861).

4. Procédé selon la revendication 2, dans lequel la deuxième étape de détection de niveau d'eau (S130) comporte en outre une étape de détection de niveau d'eau (S132) de détection du niveau d'eau du collecteur d'eau (860) après la première étape de vidange (S120),
dans lequel la première étape de détection de niveau d'eau (S110) est réalisée après une certaine période de temps lorsque le niveau d'eau du collecteur d'eau (860) ne dépasse pas un niveau d'eau défini dans l'étape de détection de niveau d'eau (S132).

5. Procédé selon la revendication 4, comprenant en outre une étape de détection de niveau d'eau modifié de détection d'un changement du niveau d'eau du collecteur d'eau (860) lorsque le niveau d'eau du collecteur d'eau (860) dépasse le niveau d'eau défini dans l'étape de détection de niveau d'eau (S132).

6. Procédé selon la revendication 5, dans lequel l'étape de détection de niveau d'eau modifié comporte en outre une étape de détection de changement de niveau d'eau de détection que le niveau d'eau du collecteur d'eau (860) change pendant une deuxième période de temps de détection de niveau d'eau.

7. Procédé selon la revendication 6, dans lequel l'étape de détection de niveau d'eau modifié comporte :
la réalisation de l'étape de détection de niveau d'eau à nouveau lorsque le niveau d'eau du collecteur d'eau (860) ne change pas dans la deuxième période de temps de détection de niveau d'eau ; et
une étape de détection d'un nombre de fois de préférence où le niveau d'eau maximal est atteint de détection du nombre de fois où le niveau d'eau du collecteur d'eau (860) est détecté comme étant le niveau d'eau maximal pendant la deuxième période de temps de détection de niveau d'eau lorsque le niveau d'eau du collecteur d'eau (860) change pendant la deuxième période de temps de détection de niveau d'eau.

8. Procédé selon la revendication 7, dans lequel l'étape de détection du nombre de fois où le niveau d'eau maximal est atteint comporte :
le maintien du fonctionnement de la pompe à condensat (861) lorsque le niveau d'eau du collecteur d'eau (860) est détecté comme étant le niveau d'eau maximal un deuxième nombre de fois de détection de niveau d'eau ou moins pendant la deuxième période de temps de détection de niveau d'eau ; et
de préférence la réalisation de l'étape d'initialisation de soupape de commutation de canal d'écoulement (S140) lorsque le niveau d'eau du collecteur d'eau (860) est détecté comme étant le niveau d'eau maximal un deuxième nombre de fois de détection de niveau d'eau ou plus pendant la deuxième période de temps de détection de niveau d'eau.

9. Procédé selon la revendication 8, dans lequel l'étape de détection du nombre de fois où le niveau d'eau maximal est atteint rend la détermination basée sur le niveau d'eau du collecteur d'eau (860) qui est détecté au moins deux fois pendant la deuxième période de temps de détection de niveau d'eau.

10. Procédé selon la revendication 9, dans lequel la soupape de commutation de canal d'écoulement (870) comporte le canal d'écoulement de vidange pour vidanger le condensat, une pluralité de canaux d'écoulement de lavage (833) pour que le condensat lave le premier échangeur de chaleur (910), une spirale de commutation (875) configurée pour commuter un angle de rotation correspondant au canal d'écoulement de vidange et aux canaux d'écoulement de lavage, et un bouchon disposé entre le canal d'écoulement de vidange et les canaux d'écoulement de lavage (833) et configuré pour limiter la rotation de la spirale de commutation (875),
dans lequel l'étape d'initialisation de soupape de commutation de canal d'écoulement (S140) comporte la rotation de la spirale de commutation (875) dans un sens ou dans l'autre sens, mais la commande de l'angle de rotation de celle-ci de telle sorte que la spirale de commutation (875) passe par un emplacement du canal d'écoulement de vidange ou des emplacements des canaux d'écoulement de lavage (833) adjacents au bouchon.

11. Procédé selon la revendication 1, dans lequel la deuxième étape de vidange (S150) comporte en outre une étape d'arrêt de soufflante d'arrêt du fonctionnement de la soufflante (8321) lorsque la soupape de commutation de canal d'écoulement (870) est commutée sur un emplacement de vidange pendant le fonctionnement de la pompe à condensat (861).

12. Procédé selon la revendication 1, dans lequel la deuxième étape de vidange (S150) comporte en outre une étape de décélération de soufflante de décélération du fonctionnement de la soufflante (8312) lorsque la soupape de commutation de canal d'écoulement (870) est commutée sur un emplacement de vidange pendant le fonctionnement de la pompe à condensat (861).

13. Procédé selon la revendication 1, dans lequel la deuxième étape de vidange (S150) comporte au moins une d'une étape d'arrêt de soufflante d'arrêt du fonctionnement de la soufflante (8312) lorsque la soupape de commutation de canal d'écoulement (870) est commutée sur un emplacement de vidange pendant le fonctionnement de la pompe à condensat (861) et d'une étape de ralentissement de soufflante de ralentissement du fonctionnement de la soufflante (8312).

14. Procédé selon les revendications 11 à 13, comprenant en outre, après la deuxième étape de vidange (S150), une troisième étape de détection de niveau d'eau (S180) de détection du niveau d'eau du condensat vidangé dans la deuxième étape de vidange (S150),
dans lequel la troisième étape de détection de niveau d'eau (S180) comporte la réalisation à nouveau de la première étape de détection de niveau d'eau (S110) lorsque le niveau d'eau du collecteur d'eau (860) est détecté comme étant égal ou inférieur à un niveau d'eau défini, et l'arrêt du fonctionnement de l'appareil de traitement de linge lorsque le niveau d'eau du collecteur d'eau (860) est détecté comme étant égal ou supérieur au niveau d'eau défini.

15. Procédé selon la revendication 14, comprenant en outre une étape de notification (S190) de notification d'un utilisateur lorsque le niveau d'eau du collecteur d'eau (860) est détecté comme étant supérieur ou égal au niveau d'eau défini dans la troisième étape de détection de niveau d'eau (S180).
